# EUROPEAN PATENT APPLICATION

(11) **EP 1 293 822 A2**
(43) Date of publication of application: **19.03.2003**
(21) Application number: 02019015.3
(22) Date of filing: 26.08.2002
(51) Int. Cl.: G02F 1/13357

(54) **Image display device and front light**

(30) Priority: 27.08.2001 JP 2001306949; 03.09.2001 JP 2001266570
(71) Applicant: Omron Corporation, Kyoto-shi, Kyoto 600-8530 (JP)
(72) Inventor: Shinohara, Masayuki, Omron Corporation, Shiokoji-dori Shimogyo-ku Kyoto 600-8530 (JP); Makuta, Isao, Omron Corporation, Shiokoji-dori Shimogyo-ku Kyoto 600-8530 (JP); Ueno, Yoshihiro, Omron Corporation, Shiokoji-dori Shimogyo-ku Kyoto 600-8530 (JP)
(74) Representative: Kilian, Helmut, Dr.

(57) **Abstract**

The invention improves contrast in a reflection type liquid crystal display device. In this reflection type liquid crystal display device, an optical pattern arranged in a light guide plate and formed in a V-groove shape in section is inclined with respect to the advancing direction of light within the light guide plate when this optical pattern is seen from a direction perpendicular to the light guide plate. Thus, light reflected on the optical pattern is reflected toward the back face side in a slanting direction.

## Description

### BACKGROUND OF THE INVENTION

### FIELD OF THE INVENTION

The present invention relates to an image display device and a front light, and particularly relates to a reflection type image display device of an image excellent in contrast and a front light used in this image display device.

### DESCRIPTION OF THE RELATED ART

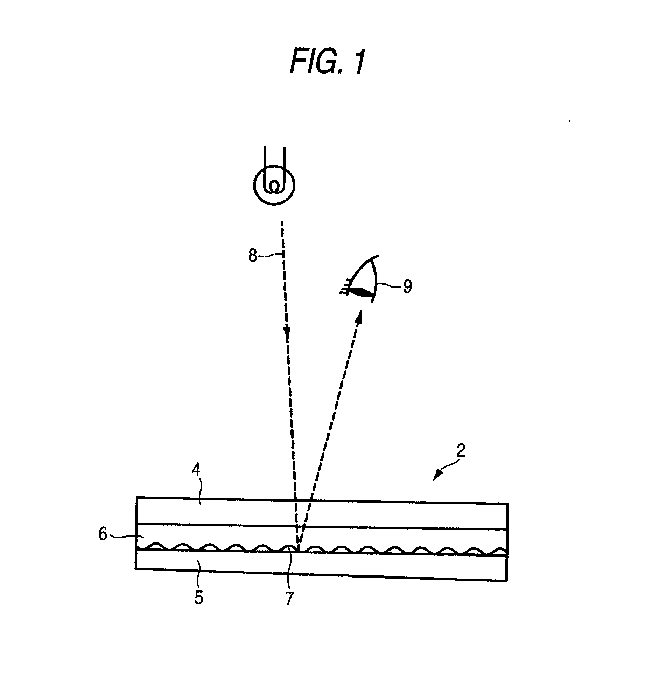

Fig. 1 is a schematic sectional view showing the structure of a liquid crystal display panel 2 of a reflection type conventionally known. In this reflection type liquid crystal display panel 2, a liquid crystal layer 6 is nipped and sealed between two glass substrates 4 and 5, and a reflection plate 7 is arranged on the front face of the glass substrate 5 on the back face side. An unillustrated polarizing plate is arranged in the glass substrate 4 on the front face side in accordance with necessity. In accordance with this liquid crystal display panel 2, an image can be displayed by modulating light obtained by reflecting external light 8 from the sun, interior illumination, etc. Namely, in a pixel turned on (display state), the external light 8 incident to the liquid crystal display panel 2 passes through the liquid crystal layer 6 and reaches the reflection plate 7. The external light 8 reflected on the reflection plate 7 again passes through the liquid crystal layer 6 and is emitted in front of the liquid crystal display panel 2, and is recognized by an observer 9. In contrast to this, in the pixel turned off (non-display state), when the external light 8 incident to the liquid crystal display panel 2 passes through the liquid crystal layer 6 and reaches the reflection plate 7, the light reflected on the reflection plate 7 is absorbed into the liquid crystal layer 6 and its polarizing direction is rotated 90° and this light is shielded by a polarizer so that no light is emitted in front of the liquid crystal display panel 2. As this result, the image is generated by on and off distributions (optical modulation) of the pixel.

Since the image is generated by utilizing the external light (the sun light, the interior illumination, etc.) as mentioned above in the reflection type liquid crystal display panel 2, no image can be generated in a dark plate having no external light. Therefore, it is necessary to illuminate the liquid crystal display panel from the forward direction so as to see the reflection type liquid crystal display panel in the dark place.

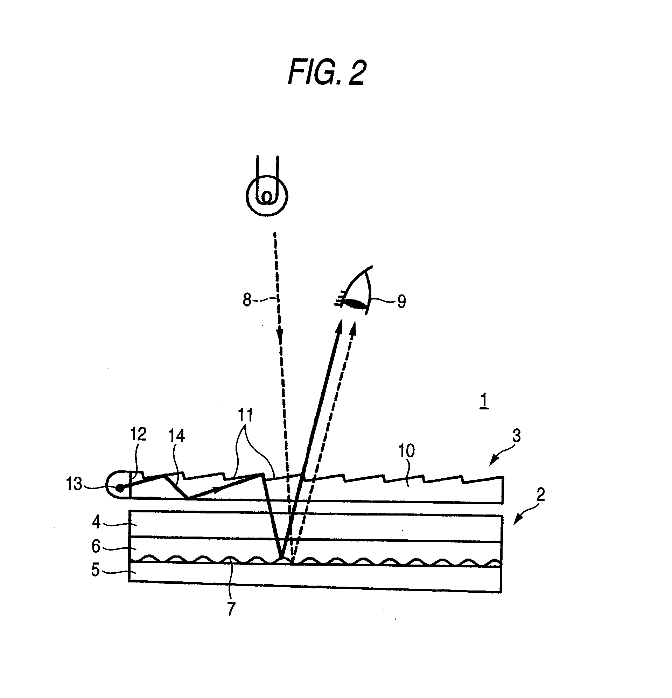

Therefore, as shown in Fig. 2, a reflection type liquid crystal display device 1 is formed by arranging a front light 3 in front of the reflection type liquid crystal display panel 2 so that the image can be generated even in the dark place. In the front light 3 used in the reflection type liquid crystal display device 1 of Fig. 2, an optical pattern 11 having a triangular wave shape in section is molded on the surface of a light guide plate 10 constructed by transparent resin such as polycarbonate resin, methacrylic resin, etc. having a large refractive index. In a position opposed to an end face (this is called a light incident end face) 12 of the light guide plate 10, a light source 13 is arranged along this light incident end face 12.

When the light source 13 is lighted, as shown in Fig. 2, light 14 emitted from the light source 13 is incident into the light guide plate 10 from the light incident end face 12, and is propagated from the side close to the light source 13 to the side far from the light source 13 while this light is totally reflected between the front and back faces of the light guide plate 10. The light 14 reflected on the optical pattern 11 of the light guide plate 10 in an approximately perpendicular direction on the way to the far side passes through the back face of the light guide plate 10 and is emitted from the back face of the light guide plate 10. Thus, the light 14 uniformly emitted from the approximately entire back face of the light guide plate 10 illuminates the liquid crystal display panel 2 and can generate an image even in the dark place. The light 14 reflected and returned by the liquid crystal display panel 2 is transmitted through the light guide plate 10 and is recognized by the observer 9.

The optical pattern for emitting the light confined within the light guide plate from the back face of the light guide plate is not limited to the above triangular wave shape, but may be also set to a pattern of a V-groove shape formed on the front face of the light guide plate, a pattern of a rectangular shape in section projected to the back face of the light guide plate, etc.

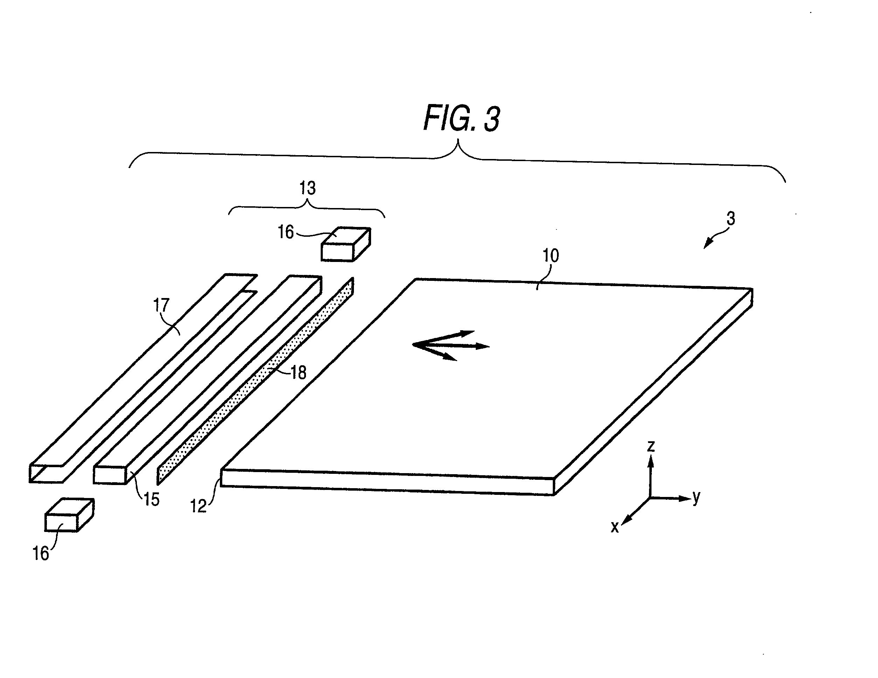

Fig. 3 is a view for explaining the construction of a light source used in the reflection type liquid crystal display device. In this light source 13, a light emitting element 16 such as a light emitting diode is opposed to both the ends of a light stick 15 constructed by transparent dioptic resin. The upper, lower and rear faces of the light stick 15 are covered with a reflection member 17 (this is also a fixing holder of the light stick 15), and the front face of the light stick 15 is covered with a diffusion plate 18. This light source 13 is arranged along the light incident end face 12 so as to be opposed to the light incident end face 12 of the light guide plate 10. In this light source 13, light emitted from the light emitting element 16 is transmitted from both end faces of the light stick 15 into the light stick 15, and is reflected on the reflection member 17 so that this light is transmitted into the light stick 15 and is emitted little by little from the front face of the light stick 15. Thus, the light approximately uniformly emitted from the front face of the light stick 15 is diffused by the diffusion plate 18 and is then incident to the light incident end face 12 of the light guide plate 10.

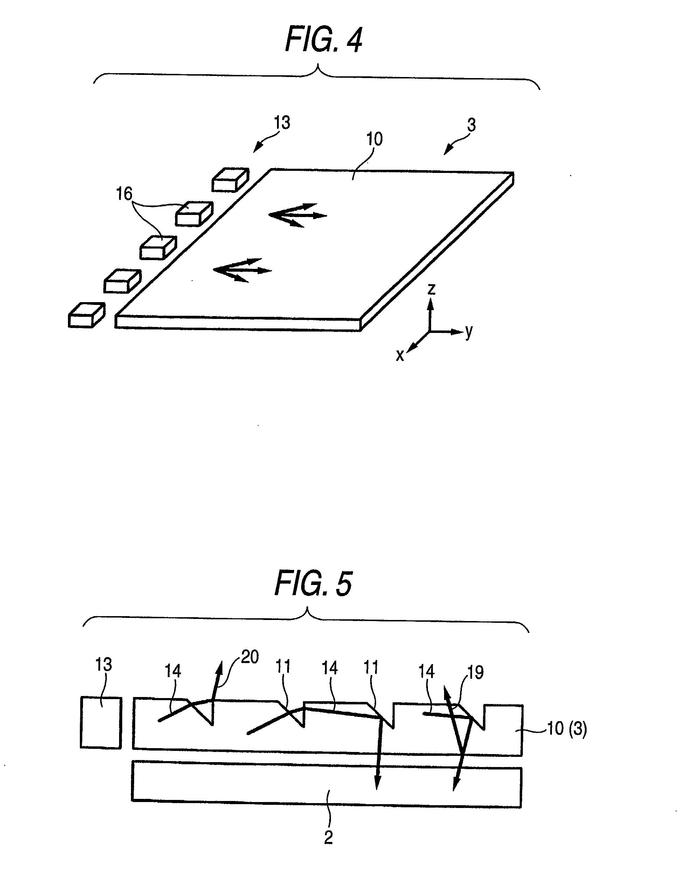

Fig. 4 is a view for explaining the light source of a separate structure used in the reflection type liquid crystal display device. In this light source 13, plural or many light emitting elements 16 are arranged along the light incident end face 12 of the light guide plate 10, and light emitted from each light emitting element 16 is introduced into the light guide plate 10.

The light 14 introduced into the light guide plate 10 as mentioned above is transmitted into the light guide plate 10 while the total reflection is repeated between the front and back faces of the light guide plate 10. As shown in Fig. 5, this light 14 is reflected on a slanting face of the optical pattern 11 and is transmitted toward the back face of the light guide plate 10, and passes through the back face of the light guide plate 10 and illuminates the liquid crystal display panel 2. Otherwise, after this light 14 passes through one slanting face of the optical pattern 11, the light 14 passes through the other opposed slanting face and is again incident into the light guide plate 10. This light is then reflected on the next optical pattern 11 and is transmitted toward the back face of the light guide plate 10, and passes through the back face of the light guide plate 10 and illuminates the liquid crystal display panel 2.

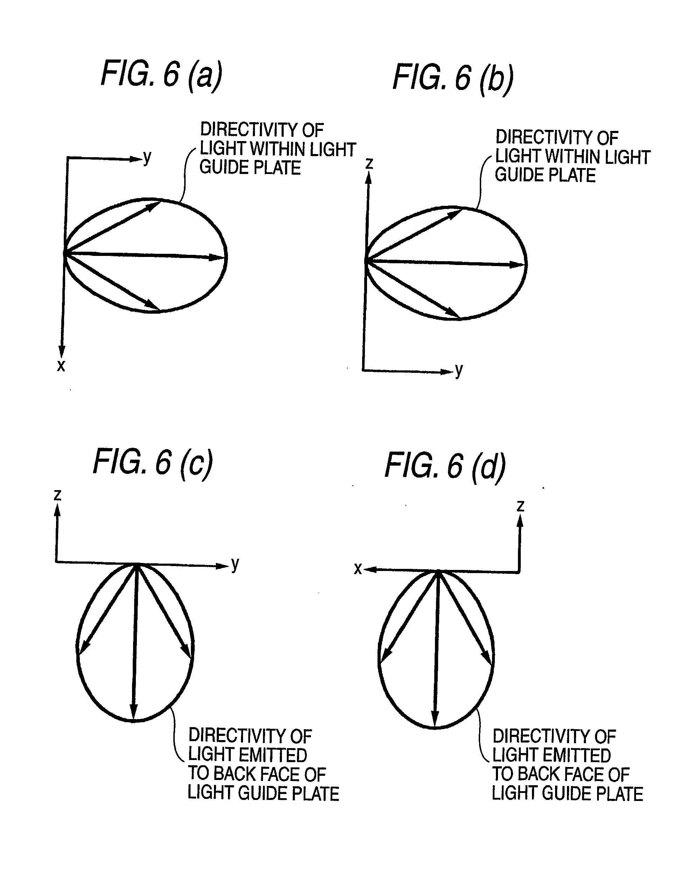

The above light guided from the light source 13 to the light guide plate 10 is diffused by the diffusion plate 18 and is then introduced to the light guide plate 10. Otherwise, the light emitted from each light emitting element 16 is directly introduced to the light guide plate 10. Accordingly, the widening degree of the light is large. Namely, as shown in Figs. 3 and 4, when the x-axis is set to the length direction of the light incident end face 12 of the light guide plate 10, and the y-axis is set to the direction perpendicular to the light incident end face 12, and the z-axis is set to the thickness direction of the light guide plate 10 (hereinafter the x-axis, the y-axis and the z-axis are similarly defined and used), the directivity of light (within the xy plane) seen from the upper face of the light guide plate 10 within the light guide plate 10 is widened in the x-axis direction as shown in Fig. 6A, and the directivity of light (within the yz plane) seen from the side face of the light guide plate 10 is also widened in the x-axis direction as shown in Fig. 6B. Accordingly, the directivity of light emitted from the back face of the light guide plate 10 is also widened in the x-axis direction as shown in Figs. 6C and 6D. Here, Fig. 6C shows the directivity (within the yz plane) in which the emitted light is seen from the side face of the light guide plate 10. Fig. 6D shows the directivity (within the zx plane) in which the light guide plate 10 is seen from the side of the light incident end face 12.

The reflection type liquid crystal display device is constructed as mentioned above, but the performances of light utilization efficiency and contrast are required with respect to such a reflection type liquid crystal display device. These requirements have gradually become severe as the spread of the reflection type liquid crystal display device is advanced and the utilization field is enlarged. Next, the present situation and requirement levels of these light utilization efficiency and contrast will be explained.

### (With respect to light utilization efficiency)

The light utilization efficiency will first be explained. The liquid crystal display device is used in many cases in a portable terminal such as a portable telephone, a mobile computer, etc. In these portable devices, a reduction in power consumption is required to lengthen a battery driving time. It is important to reduce the power consumption of an element and a circuit so as to reduce the power consumption of the portable device, but the improvement of the light utilization efficiency also becomes an important factor. This is because the power of the light source can be restrained by improving the light utilization efficiency without dropping screen brightness of the liquid crystal display device so that the power consumption can be reduced.

The maximum advantage of the reflection type liquid crystal display device in comparison with a transmission type liquid crystal display device is low power consumption. This is because no light (backlight) as a constructional element of largest power consumption in the transmission type liquid crystal display device is required in a place having the external light. Therefore, the utilization of the reflection type liquid crystal display device is enlarged in the portable device requiring low power consumption.

However, it is necessary to light the front light in the dark place even in the above reflection type liquid crystal display device so that the effect of unnecessity of the backlight in the reflection type liquid crystal display device is reduced. Therefore, a bright front light having lower power consumption is also required in the reflection type liquid crystal display device, and the improvement of the light utilization efficiency is required more and more.

Therefore, when the principle of the present reflection type liquid crystal display device is considered, light (parallel light) from the sun light is used as the external light in many cases when the reflection type liquid crystal display device is used outdoors. Since using place and time of a device assembling the liquid crystal display device thereinto are not specified with respect to this external light, no direction of the external light incident to the liquid crystal display device is constant due to the place and the time, and the direction of light reflected from the liquid crystal display device is also different in accordance with the place and the time.

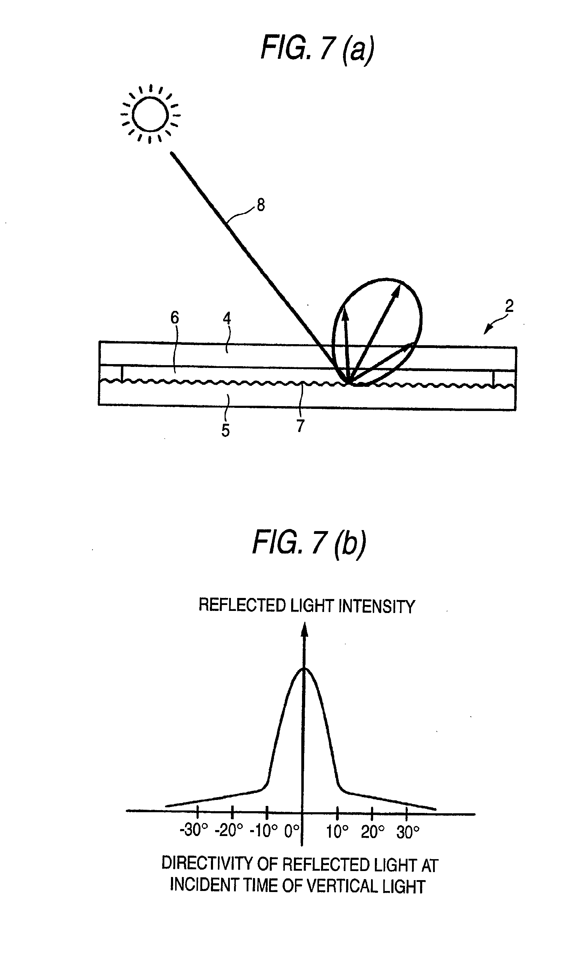

However, the direction in which the liquid crystal display device is seen most easily and most frequently is a direction close to ±10° to ±20° with the direction perpendicular to the screen of the liquid crystal display device as a center. Accordingly, it is necessary to reflect light in the direction perpendicular to the screen irrespective of the direction of the external light so as to preferably set visual recognizing property of the reflection type liquid crystal display device. Therefore, as shown in Fig. 7A, the view field angle is widened by diffusing and reflecting the light 8 on the reflection plate 7 so that an image is seen from the direction approximately perpendicular to the screen at any time. However, when the light reflected on the reflection plate 7 is excessively diffused, the light is too widened so that the entire screen of the liquid crystal display device is darkened. Therefore, as shown in Fig. 7B, it is suitable to normally diffuse the light to such an extent of ±20° to ±30° with the direction perpendicular to the screen as a center.

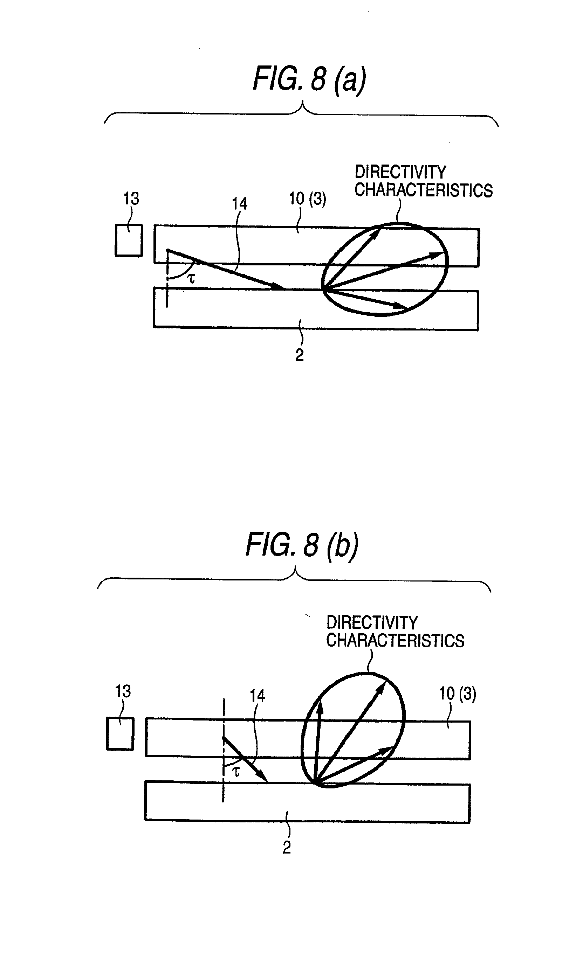

It is necessary from such a background to emit the emitted light of the front light at an angle τ within the range of 20° to 30° with respect to the perpendicular line of the liquid crystal display panel as shown in Fig. 8A so as to return the reflected light in the direction perpendicular to the screen of the liquid crystal display device even at a lighting time of the front light 3. Thus, as shown in Fig. 8B, the light emitted at the angle τ larger than this range is slantingly reflected so that this light becomes a loss.

Accordingly, when the light utilization efficiency of the image display device is raised, the ratio of light emitted from the light guide plate is not only raised, but the ratio of the light emitted within the range of ±20° to ±30° with the direction perpendicular to the screen of the liquid crystal display device as a center must be also considered.

### (With respect to contrast)

When light except for the image is emitted to the side opposed to the liquid crystal display panel in the front light, the light of the front light is directly incident to an observer's eye so that the screen of the liquid crystal display device becomes whitish even at the time of a black display. Therefore, the contrast of image quality (brightness of white display/brightness of black display) is greatly reduced. For example, in the case of the front light 3 used in the liquid crystal display device 1 as shown in Fig. 2, when light 14 reflected onto the back face side by the optical pattern 11 of a triangular wave shape is reflected on the back face of the light guide plate 10 as shown in Fig. 5, this light 14 is emitted from the front face of the light guide plate 10 as in light 19 shown in Fig. 5. When this light is incident to the observer's eye, the screen is whitely seen, which becomes a cause of the reduction in contrast. Further, light transmitted through the slanting face of the optical pattern 11 and reflected on the other slanting face (corners are rounded by roundness at a molding time in many cases) as in light 20 shown in Fig. 5 also becomes a cause of the reduction in contrast of the image.

As mentioned above, the improvement of both characteristics of the light utilization efficiency and the contrast is required more and more in the image display device such as the reflection type liquid crystal display device.

### SUMMARY OF THE INVENTION

In consideration of the above technical background, an object of the present invention is to further improve the contrast of a reflection type image display device.

A first image display device in the present invention is constructed by a reflection type image display panel and a front light arranged in front of the reflection type image display panel; wherein the contrast of an image of the image display panel formed by light emitted from the front light within at least one plane including a direction perpendicular to the screen of the image display panel has at least one minimum value on each of both sides with respect to the direction perpendicular to the screen of the image display panel.

In the first image display device of the present invention, the contrast of the image has at least one minimum value on each of both the sides with respect to the direction perpendicular to the screen of the image display panel. Accordingly, noise light caused in the image display panel and the front light is collected in an area for minimizing the contrast. The noise light is correspondingly reduced on the front face (the direction perpendicular to the screen of the image display device) so that the contrast of the image is raised. Accordingly, when the image display device is normally seen, the contrast of the front face image is raised so that image quality can be improved.

In an embodiment mode of the first image display device of the present invention, the larger part of the light emitted from the front light and reflected on the front face of the image display panel is regular reflected light. In this embodiment mode, since the light is regularly reflected on the front face of the image display panel, the light reflected on the front face of the image display panel is also reflected in the same direction as the reflected light on the front face of the front light on image display panel side. Accordingly, the noise light on the front face of the image display panel is also reflected in a direction dislocated from the front face of the image display device, and no contrast of the image is easily reduced.

Antiglare processing is conventionally performed on the front face of the image display panel to reduce the reflected light of external light. However, when such antiglare processing is performed, no light is slantingly Fresnel-reflected on the front face of the image display panel when the light is slantingly emitted from the front light as in the present invention. As a result, the noise light is also diffused in the direction perpendicular to the screen so that the contrast is reduced. Accordingly, as in this embodiment mode, it is desirable that no antiglare processing is performed on the front face of the image display panel and the light is regularly reflected. However, when it is desirable to restrain the reflection due to the external light, it is preferable to form an undiffused AR coat in the image display device.

In another embodiment mode of the first image display device of the present invention, reflected light directivity of the light passing through the front light and incident perpendicularly to the image display panel has a maximum value in a direction different from that providing a maximum value in the perpendicular direction, and the angle formed by the direction providing the maximum value of the reflected light directivity and the direction perpendicular to the image display panel has a value close to the angle formed by the direction providing a maximum value in the emitted light intensity of the light emitted from a light emitting face of the front light and the direction perpendicular to the image display panel. Accordingly, the noise light due to the external light and the noise light due to the front light are emitted in similar directions, and the contrast of the image is maximized in the direction perpendicular to the image display panel. Accordingly, preferable image quality can be also obtained in the cases of the external light and the use of the front light.

Further, the reflected light directivity of the image display panel, i.e., diffusion characteristics have a maximum value except for the perpendicular direction. Furthermore, if this direction approximately has the same angle as the direction providing the maximum value of the emitted light intensity of the front light, brightness of the image has a large value in the direction perpendicular to the screen. Thus, if the diffusion characteristics of the liquid crystal display panel are set in conformity with the emitted light of the front light, the characteristics of the reflection type image display device can be improved. If the angle between the directions of the maximum value of the emitted light intensity of the front light is set to 2θa, it is desirable to set the angle 2θL between the maximum values of the diffusion characteristics of the image display panel to an angle of θa to 3θa as a standard.

A second image display device in the present invention is constructed by a reflection type image display panel and a front light arranged in front of the reflection type image display panel; wherein the advancing direction of light within the front light is approximately uniformed in one direction in each position within the front light when the advancing direction is seen from a direction perpendicular to the front light; and the contrast of an image of the reflection type image display panel formed by the front light within a section perpendicular to this light advancing direction is highest in the direction perpendicular to the front light, and at least one minimum value of the contrast is provided within the range of 10° or more and 30° or less with respect to the perpendicular direction.

In the second image display device in the present invention, the central contrast is raised within a vertical section in the advancing direction of light. Namely, since the contrast of the image of the above reflection type image display panel provided by the front light is highest in the direction perpendicular to the front light, the image of preferable image quality is easily seen on the front face of the image display device.

It is desirable that no noise light is emitted at all to the front face side (direction opposed to the image display panel) of the front light so as not to reduce the contrast of the image or the image quality. However, the screen is normally seen in a predetermined view field angle range with the direction perpendicular to the screen of the liquid crystal display device as a center. Accordingly, when light is really leaked to the front face side of the front light, it is considered that it is sufficient to restrain the noise light emitted within this range as much as possible and set the direction of the light emitted from the front face of the front light outside this range. In the image display device in the present invention, at least one minimum value of the contrast is provided within the range of 10° or more and 30° or less with respect to the direction perpendicular to the front light. Accordingly, the noise light is collected in this direction and no contrast of the front face image is easily reduced by the noise light. In particular, when the direction for minimizing the contrast is 10° or less with respect to the perpendicular direction, the contrast of the front face image is reduced and the image quality is reduced (see Fig. 7B). In contrast to this, when the minimum value of the contrast is 30° or more, the light of the image emitted on the front face is also reduced so that the contrast of the front face image is reduced. Accordingly, preferable contrast can be realized if at least one minimum value of the contrast is provided within the range of 10° or more and 30° or less with respect to the direction perpendicular to the front light.

A third image display device in the present invention is constructed by a reflection type image display panel and a front light arranged in front of the reflection type image display panel; wherein the contrast of an image of the reflection type image display panel formed by light of the front light in an approximately arbitrary position of the front light is highest in a direction perpendicular to the front light in a plane perpendicular to a direction connecting this position and a light source in the approximately arbitrary position, and at least one minimum value of the contrast is provided within the range of 10° to 30° with respect to the perpendicular direction.

In the third image display device in the present invention, the central contrast becomes high when the central contrast is seen from the light source direction. Namely, since the contrast of the image of the above reflection type image display panel provided by the front light is highest in the direction perpendicular to the front light, the image of preferable image quality is easily seen on the front face of the image display device. Further, since at least one minimum value of the contrast is provided within the range of 10° or more and 30° or less with respect to the direction perpendicular to the front light, the noise light is collected in this direction and no contrast of the front face image is easily reduced by the noise light. When the direction for minimizing the contrast is 10° or less with respect to the perpendicular direction, the contrast of the front face image is reduced and the image quality is reduced. In contrast to this, when the minimum value of the contrast is 30° or more, the light of the image emitted to the front face is also reduced so that the contrast of the front face image is reduced. Accordingly, preferable contrast can be realized if at least one minimum value of the contrast is provided within the range of 10° to 30° with respect to the direction perpendicular to the front light.

A first front light in the present invention comprises a light source and a light guide plate and is arranged in front of a reflection type liquid crystal display panel; wherein the emitted light intensity of light irradiated from the light source and emitted from a light emitting face of the light guide plate within at least one plane including a direction perpendicular to the light emitting face of the light guide plate has at least one maximum value on each of both sides with respect to the direction perpendicular to the light emitting face of the light guide plate.

In the first front light in the present invention, the emitted light intensity of the light emitted from the light emitting face of the light guide plate has at least one maximum value on each of both the sides with respect to the direction perpendicular to the light emitting face of the light guide plate. Accordingly, the noise light emitted to the direction perpendicular to the front light can be reduced even when the light within the light guide plate is reflected on the front face of the light guide plate on the irradiated object side. When the front light is used together with the reflection type image display device, the contrast of the image seen from the front face can be raised and preferable image quality can be obtained.

In an embodiment mode of such a first front light in the present invention, the angle of the direction having the maximum value of the light emitted from the light emitting face of the light guide plate is smaller than the reflection diffusion angle of an image display device as an irradiated object. Accordingly, the emitting direction of the noise light has a large angle with respect to the direction perpendicular to the front light so that the light directed to the front face is reduced. As this result, the reduction in contrast on the front face can be restrained. However, the contrast is also reduced when the emitting angle of the noise light is too close to the perpendicular direction. Therefore, it is desirable that the angle formed by the direction perpendicular to the light emitting face of the light guide plate and the direction providing the maximum value of the emitted light intensity of the light emitted from the light emitting face is 10° or more and 30° or less.

A second front light in the present invention comprises a light source and a light guide plate for confining light from the light source and widening this light in a planar shape and emitting this light to an irradiated object side and transmitting light reflected on the irradiated object to an observer side; wherein the advancing direction of the light within the light guide plate in each position within the light guide plate is approximately uniformed in one direction when this advancing direction is seen from a direction perpendicular to the light guide plate; and the direction providing a maximum value in directivity of the light emitted to the irradiated object side within a plane perpendicular to the light advancing direction has an angle of 10° or more and 30° or less with respect to the direction perpendicular to the light guide plate.

In the second front light in the present invention, for example, light uniformed in one direction within the light guide plate is introduced by using a linear light source and a point light source. In such a front light, the direction providing a maximum value in directivity of the light emitted to the irradiated object side (e.g., the liquid crystal display panel side) within the plane perpendicular to the light advancing direction has an angle of 10° or more and 30° or less with respect to the direction perpendicular to the light guide plate. Accordingly, when the second front panel is used together with the reflection type image display panel, the contrast of the front face image can be preferably set.

In an embodiment mode of such a front light in the present invention, a concavo-convex pattern for emitting the light within the light guide plate from the light emitting face by reflecting or refracting this light is formed on the light emitting face of the light guide plate or its opposite side face, and is slantingly arranged with respect to a direction perpendicular to the advancing direction of the light within the light guide plate when the concavo-convex pattern is seen from a direction perpendicular to the light emitting face. Accordingly, the light uniformed in one direction and introduced within the light guide plate is reflected on the concavo-convex pattern so that this light has an angle of 10° or more and 30° or less with respect to the perpendicular direction.

A third front light in the present invention comprises a light source and a light guide plate for confining light from the light source and widening this light in a planar shape and emitting this light to an irradiated object side and transmitting light reflected on the irradiated object to an observer side; wherein the advancing direction of the light within the light guide plate in each position within the light guide plate is approximately uniformed in one direction when this advancing direction is seen from a direction perpendicular to the light guide plate; and a direction for maximizing the directivity of the light emitted to the observer side and a direction for maximizing the directivity of the light emitted to the irradiated object side are not conformed to each other within a plane perpendicular to the light advancing direction.

In the third front light in the present invention, for example, light uniformed in one direction within the light guide plate is introduced by using a light source and a point-shaped light source. The direction for maximizing the directivity of the light emitted to the observer side and the direction for maximizing the directivity of the light emitted to the irradiated object side are not conformed to each other (in reverse directions). Accordingly, no noise light directly emitted and generated on the observer side is easily emitted in the direction for maximizing the directivity of the light (image) emitted to the observer side after the light is irradiated to the irradiated object and is reflected on the irradiated object. Thus, the contrast of the image seen in the direction for maximizing the directivity can be preferably set.

In an embodiment mode of the third front light in the present invention, an emitting pattern face for emitting the light within the light guide plate from the light emitting face by reflecting or refracting this light, and a noise generating face for emitting the light to the observer side are formed on the light emitting face of the light guide plate or its opposite side face; and the emitting pattern face and the noise generating face are mutually inclined when these faces are seen from the direction perpendicular to the light emitting face. Namely, the emitting pattern face emits the light onto the irradiated object side by its inclination. The noise generating face emits the light onto the observer side by its inclination.

A fourth front light in the present invention comprises a light source and a light guide plate for confining light from the light source and widening this light in a planar shape and emitting this light to an irradiated object side and transmitting light reflected on the irradiated object to an observer side; wherein a concavo-convex pattern for reflecting the light within the light guide plate is formed on a light emitting face of the light guide plate or its opposite side face; the advancing direction of the light within the light guide plate in each position within the light guide plate is approximately uniformed in one direction when this advancing direction is seen from a direction perpendicular to the light guide plate; a direction for maximizing the directivity of the light reflected by the concavo-convex pattern and transmitted through the front face of the light guide plate on the irradiated object side, and a direction for maximizing the directivity of the light again reflected on the front face of the light guide plate on the irradiated object side and emitted to the observer side are not conformed to each other within a plane perpendicular to the light advancing direction; and a direction for maximizing the directivity of the light emitted to the observer side by the concavo-convex pattern and a direction for maximizing the directivity of the light emitted to the irradiated object side are not conformed to each other within the plane perpendicular to the light advancing direction.

In the fourth front light in the present invention, for example, light uniformed in one direction within the light guide plate is introduced by using a light source and a point-shaped light source. The direction for maximizing the directivity of the light emitted to the observer side and the direction for maximizing the directivity of the light emitted to the irradiated object side are not conformed to each other (in reverse directions). Accordingly, no noise light reflected by the concavo-convex pattern and again reflected on the front face of the light guide plate on the irradiated object side and emitted to the observer side is easily emitted in the direction for maximizing the directivity of the light (image) emitted to the observer side after the light is irradiated to the irradiated object and is reflected on the irradiated object. Thus, the contrast of the image seen in the direction for maximizing the directivity can be preferably set. Further, the direction of the noise light reflected by the concavo-convex pattern and emitted to the observer side, and the direction for maximizing the directivity of the light emitted to the irradiated object side are not conformed to each other (in reverse directions) within the plane perpendicular to the light advancing direction. Accordingly, no noise light is easily emitted in the direction for maximizing the directivity of the light (image) emitted to the observer side after the light is irradiated to the irradiated object and is reflected on the irradiated object. Thus, the contrast of the image seen in the direction for maximizing the directivity can be more preferably set.

In an embodiment mode of the fourth front light in the present invention, a layer having a refractive index lower than that of the light guide plate is formed on the irradiated object side of the light guide plate, and the boundary face of the light guide plate and the low refractive index layer is flat, and the boundary face of the low refractive index layer and the air is a gently inclined concavo-convex face when these boundary faces are seen from the plane perpendicular to the light advancing direction. In accordance with this embodiment mode, after the emission from the front light, light reflected on the interface of the low refractive index layer and the air and changed to noise light is slantingly emitted with respect to the direction perpendicular to the screen within the plane perpendicular to the light advancing direction. Accordingly, this light is not easily overlapped with the light of the image so that the contrast of the front face image can be improved.

A fifth front light in the present invention comprises a light source and a light guide plate for confining light from the light source and widening this light in a planar shape and emitting this light to an irradiated object side and transmitting light reflected on the irradiated object to an observer side; wherein the advancing direction of the light within the light guide plate is approximately uniformed in plural directions when the advancing direction is seen from a direction perpendicular to the light guide plate.

In the fifth front light in the present invention, the advancing direction of the light within the light guide plate is approximately uniformed in plural directions. Accordingly, when any light is reflected on the concavo-convex pattern by slantingly arranging the concavo-convex pattern with respect to the advancing direction of each light and is then reflected on the light emitting face of the light guide plate and is changed to noise light, the noise light can be emitted in the slanting direction. Thus, the reduction in the contrast of the front face image can be prevented.

A sixth front light in the present invention comprises a light source and a light guide plate for confining light from the light source and widening this light in a planar shape and emitting this light to an irradiated object side and transmitting light reflected on the irradiated object to an observer side; wherein light absorption means is arranged in at least one portion of the outer circumferential face of the light guide plate.

In the sixth front light in the present invention, since the light absorption means is arranged in at least one portion of the outer circumferential face of the light guide plate, it is possible to prevent the light of the light source reaching the outer circumferential face of the light guide plate from being reflected on the outer circumferential face of the light guide plate and being changed to noise light. Thus, the reduction in the contrast of the image due to the noise light can be prevented.

A seventh front light in the present invention comprises a light source and a light guide plate for confining light from the light source and widening this light in a planar shape and emitting this light to an irradiated object side and transmitting light reflected on the irradiated object to an observer side; wherein means for emitting the light reaching the outer circumferential face of the light guide plate to the exterior of the light guide plate is arranged in at least one portion of the outer circumferential face of the light guide plate.

In the seventh front light in the present invention, since the means for emitting light to the exterior is arranged in at least one portion of the outer circumferential face of the light guide plate, it is possible to prevent the light of the light source reaching the outer circumferential face of the light guide plate from being reflected on the outer circumferential face of the light guide plate and being changed to noise light. Thus, the reduction in the contrast of the image due to the noise light can be prevented.

An eighth front light in the present invention comprises a light source and a light guide plate for confining light from the light source and widening this light in a planar shape and emitting this light to an irradiated object side and transmitting light reflected on the irradiated object to an observer side; wherein a concavo-convex pattern for reflecting or refracting the light within the light guide plate is formed by molding on a light emitting face of the light guide plate or its opposite side face; and a gate position in the molding of the light guide plate is arranged on the side opposed to the light source with respect to a forming area of the concavo-convex pattern.

In the eighth front light in the present invention, the gate position in the molding of the light guide plate is arranged on the side opposed to the light source with respect to the forming area of the concavo-convex pattern. Accordingly, resin is injected toward the light source side from the side far from the light source at a molding time of the light guide plate. As this result, the concavo-convex pattern of the light guide plate is slackened on the side near the light source, and no noise light reflected on the concavo-convex pattern is easily emitted to the observer side so that the contrast of the image can be improved.

The constructional elements explained above in this invention can be combined as much as possible.

### BRIEF DESCRIPTION OF THE DRAWINGS

Fig. 1 is a schematic sectional view showing the structure of a conventional reflection type liquid crystal display panel.
Fig. 2 is a perspective view showing a conventional reflection type liquid crystal display device.
Fig. 3 is an exploded perspective view showing the construction of a light source used in the conventional reflection type liquid crystal display device.
Fig. 4 is a perspective view showing another light source used in the conventional reflection type liquid crystal display device.
Fig. 5 is a view showing the behavior of light in a light guide plate used in a front light of the above reflection type liquid crystal display device.
Figs. 6A and 6B are views showing the directivity of light incident to the light guide plate, and Figs. 6C and 6D are views showing the directivity of light emitted from the back face of the light guide plate.
Fig. 7A is a view showing a situation in which a view field angle is widened by diffusing and reflecting light on a reflection plate of the liquid crystal display panel, and Fig. 7B is a graph showing the directivity of reflected light when light is incident perpendicularly to the liquid crystal display panel.
Figs. 8A and 8B are views showing the relation of an emission angle τ of light from the front light and the directivity of the light.
Fig. 9 is an exploded perspective view showing the structure of the liquid crystal display device of a reflection type in one embodiment mode of the present invention.
Fig. 10 is a view for explaining the structure of a light source used in the above reflection type liquid crystal display device and the behavior of light.
Fig. 11 is a graph showing a light intensity distribution in which light is emitted in a direction in which the angle formed by the front face (-x direction) of the light source 33 is α.
Fig. 12A is a view showing the directivity of light in the xy plane just after this light is incident into the light guide plate, and Fig. 12B is a view showing the directivity of light in the yz plane just after this light is incident into the light guide plate.
Fig. 13A is a perspective view showing the shape of an optical pattern arranged on the upper face of the light guide plate, and Fig. 13B is a view for explaining the principle of the liquid crystal display device using this light guide plate.
Figs. 14A, 14B and 14C are schematic views showing the behavior of light incident to the optical pattern, and also respectively showing behavior situations in the yz plane, the zx plane and the xy plane.

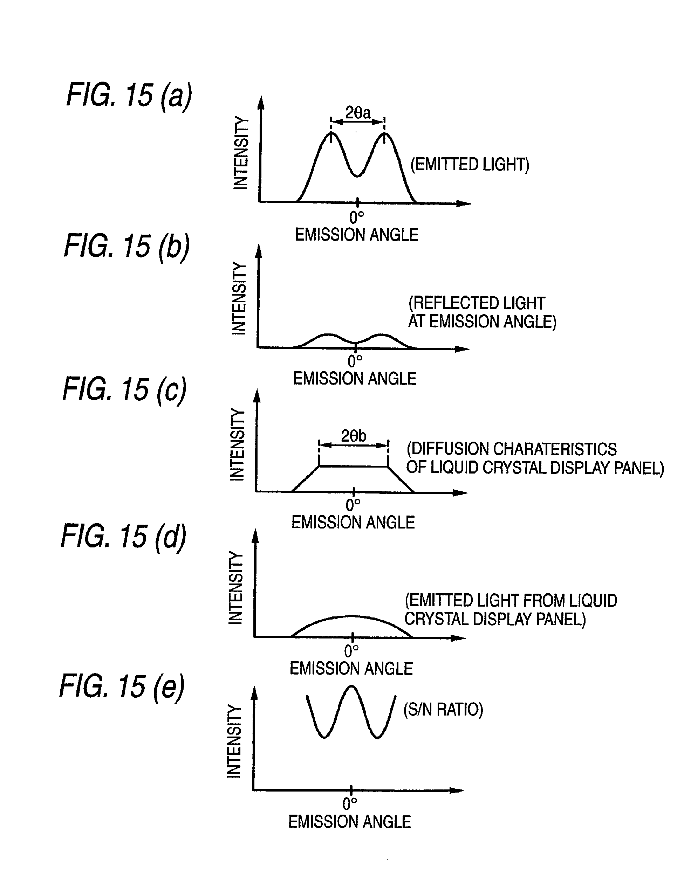

Fig. 15 is graphs showing characteristics of the liquid crystal display device. In Fig. 15, Fig. 15A is a graph showing an angular distribution of the emitted light intensity of light reflected on the optical pattern of the front light and directed to the back face of the light guide plate. Fig. 15B is a graph showing an intensity distribution of noise light reflected on the back face of the light guide plate and directed to the front face of the light guide plate. Fig. 15C is a graph showing light diffusion characteristics of the liquid crystal display panel. Fig. 15D is a graph showing an emitted light intensity distribution of light emitted from the liquid crystal display panel illuminated by the front light. Fig. 15E is a graph showing an S/N ratio (contrast of image quality) when the front light is lighted.
Fig. 16 is a perspective view showing a situation in which light is transmitted through an emitting pattern face of the optical pattern formed in a V-groove shape in section and is then reflected on a reincident face and becomes noise light.
Figs. 17A and 17B are explanatory views showing the behavior of light incident to the optical pattern and emitted from the optical pattern to the front face side of the light guide plate in the zy plane and the xz plane.
Fig. 18 is a view for explaining a method in which the noise light reflected on the back face of the light guide plate and emitted from the front face of the light guide plate has a large angle with respect to a perpendicular line rising from the light guide plate in the front light having the optical pattern arranged in parallel with a light incident end face.
Figs. 19A and 19B are a perspective view and a plan view showing the direction of the noise light emitted from the front light in the construction of Fig. 18.
Fig. 20A is a graph showing a light intensity distribution in the yz plane with respect to the noise light reflected on the optical pattern of the front light and reflected on the back face of the light guide plate and directed to the front face of the light guide plate in the construction shown in Fig. 18. Fig. 20B is a graph showing light diffusion characteristics of the liquid crystal display panel. Fig. 20C is a graph showing an emitted light intensity distribution of light emitted from the liquid crystal display panel illuminated by the front light.
Figs. 21A and 21B are a perspective view and a plan view showing the direction of the noise light emitted from the front light of the present invention.
Figs. 22A, 22B and 22C are views for explaining various modes of the optical pattern.
Figs. 23A and 23B are views showing different sectional shapes of the optical pattern.
Fig. 24 is a schematic plan view showing another structure of the light source.
Fig. 25 is a partially broken perspective view showing still another structure of the light source.
Fig. 26 is a schematic plan view showing still another structure of the light source.
Fig. 27A is a plan view showing the structure of a front light in another embodiment mode of the present invention. Fig. 27B is a plan view enlarging and showing a K-portion of Fig. 27A.
Fig. 28 is a plan view showing a front light for the reflection type liquid crystal display device in still another embodiment mode of the present invention.
Fig. 29 is an operating explanatory view of a light source portion in this front light.
Figs. 30A and 30B are a perspective view and a plan view for explaining the behavior of light reflected on a slanting face of the optical pattern in the front light of Fig. 28.
Fig. 31A is a plan view showing a front light in still another embodiment mode of the present invention. Fig. 31B is a plan view enlarging and showing an M-portion of Fig. 31A.
Fig. 32 is a perspective view of an optical pattern arranged in this front light.
Figs. 33A, 33B, 33C and 33D are respectively a front view, a rear view, a side view and a bottom view of this optical pattern.
Figs. 34A and 34B are operating explanatory views of this optical pattern.
Fig. 35 is a perspective view showing a modified example of the optical pattern shown in Fig. 32.
Fig. 36 is a bottom view showing another modified example of the optical pattern shown in Fig. 32.
Fig. 37A is a perspective view showing still another embodiment mode of the present invention. Fig. 37B is a view showing the shape of an upper portion corner face of the optical pattern in this embodiment.
Figs. 38A and 38B are a perspective view and a sectional view showing a front light in still another embodiment mode of the present invention.
Fig. 39 is an operating explanatory view of the front light shown in Fig. 38.
Figs. 40A and 40B are a perspective view showing the structure of a front light in still another embodiment mode of the present invention, and a view showing an end face of the side far from the light source.
Figs. 41A and 41B are a sectional view of the light guide plate for explaining the behavior of light incident to the optical pattern from the side opposed to the light source, and a plan view of the optical pattern.
Fig. 42A is a view showing a resin injecting direction when the light guide plate is molded. Fig. 42B is a sectional view showing the optical pattern of the light guide plate injected and molded by injecting resin from the side near the light source. Fig. 42C is a sectional view showing the optical pattern of the light guide plate injected and molded by injecting the resin from the side far from the light source.
Figs. 43A and 43B are a front view and a sectional view of the light guide plate for explaining another method for restraining the reflection of light.

### DESCRIPTION OF THE PREFERRED EMBODIMENTS

### (First embodiment)

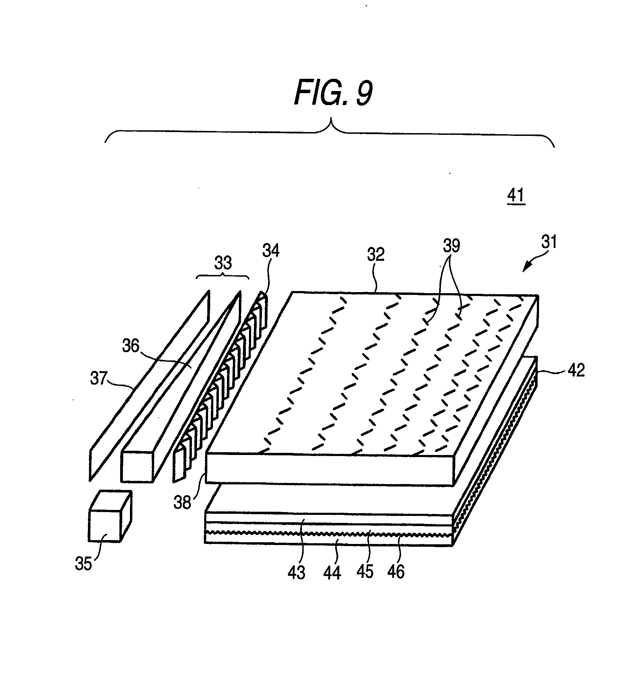

Fig. 9 is an exploded perspective view showing the structure of a liquid crystal display device 41 of a reflection type in one embodiment mode of the present invention. In this liquid crystal display device 41, a front light 31 is arranged on the front face side of a reflection type liquid crystal display panel 42. In the reflection type liquid crystal display panel 42, a liquid crystal layer 45 is nipped between front and back glass substrates 43 and 44, and a reflection plate 46 for light diffusion is arranged on the front face of the glass substrate 44 on the back face side. Further, the front light 31 is constructed by a light guide plate 32, a light source 33 and a prism sheet 34.

The light source 33 converts a point light source to a linear light source and emits light, and is constructed by a light emitting element 35 such as a light emitting diode, a wedge-shaped light guide 36, and a regular reflection plate 37. The light emitting element 35 is arranged oppositely to an end face of the light guide 36, and the regular reflection plate 37 is arranged so as to be opposed to a slanting face of the light guide 36 on its rear face.

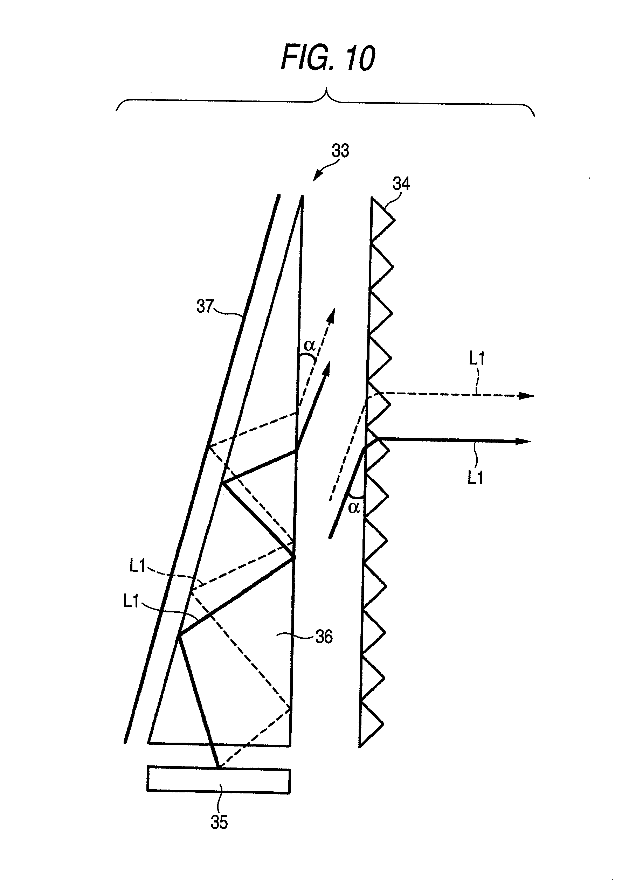

As shown in Fig. 10, when light L1 is emitted from the light emitting element 35 in this light source 33, the light L1 emitted from the light emitting element 35 is incident into the light guide 36 from the end face of the light guide 36 and is advanced to the tip side of the light guide 36 while total reflection is repeated between the front face and the rear face of the light guide 36. The light L1 leaked to the exterior from the rear face of the light guide 36 is regularly reflected on the regular reflection plate 37 and is again returned into the light guide 36. Thus, when the light L1 is propagated within the light guide 36, the incident angle of the light L1 incident to the front face of the light guide 36 is gradually reduced every time the light L1 is reflected on the rear face of the light guide 36. When the incident angle of the light L1 incident to the front face of the light guide 36 becomes smaller than a critical angle of the total reflection, the light L1 reaching the front face of the light guide 36 is emitted from the front face of the light guide 36. As this result, as shown in Fig. 10, the light L1 is slantingly emitted approximately uniformly from the approximately entire front face of the light guide 36 in a direction in which an angle α is formed with respect to the front face of the light guide 36.

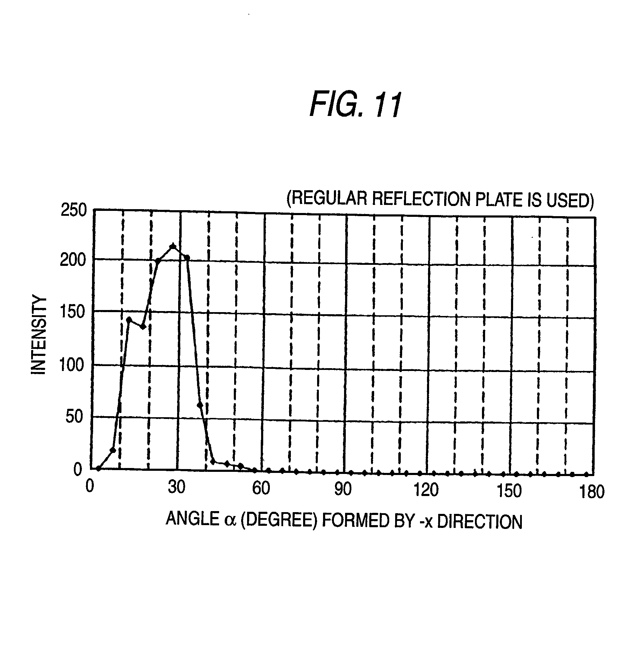

Fig. 11 is a view showing an intensity distribution of the light emitted in the direction of α (0<α<180°) when the angle formed by the front face of the light source 33 (or the front face of the light guide 36) is set to α. As can be seen from Fig. 11, the light emitted from the light source 33 has narrow directivity within 30°, and is approximately emitted in a direction of α=10° to 40° with respect to the front face of the light guide 36.

This light source 33 is arranged such that this light source 33 is opposed to an end face (light incident end face 38) of the light guide plate 32 through the prism sheet 34 intermediately nipped. The front face of the light guide 36, the prism sheet 34 and the light incident end face 38 of the light guide plate 32 are parallel to each other.

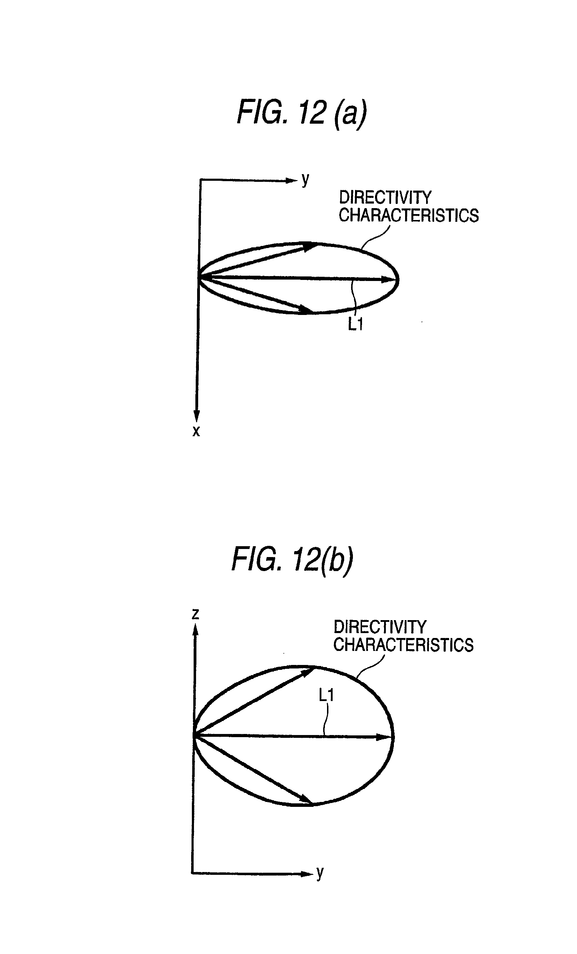

The prism sheet 34 is formed by repeatedly arranging patterns each formed in the prism shape of a triangular shape in section along the length direction of the light source 33. A light beam passing through the prism sheet 34 is deflected by a prism action of each pattern. The light L1 having narrow directivity and emitted from the front face of the light source 33 receives a refracting action when the light L1 passes through the prism sheet 34. As shown in Fig. 10, the light L1 is then emitted in the direction approximately perpendicular to the prism sheet 34, and is incident into the light guide plate 32 from the light incident end face 38. Accordingly, just after the light L1 is incident into the light guide plate 32 from the light incident end face 38, the light L1 has narrow directivity in the width direction (x-axis direction of Fig. 12) of the light guide plate 32 as shown in Fig. 12A, and also has directivity wider than the above narrow directivity in the thickness direction (z-axis direction of Fig. 12) of the light guide plate 32 as shown in Fig. 12B.

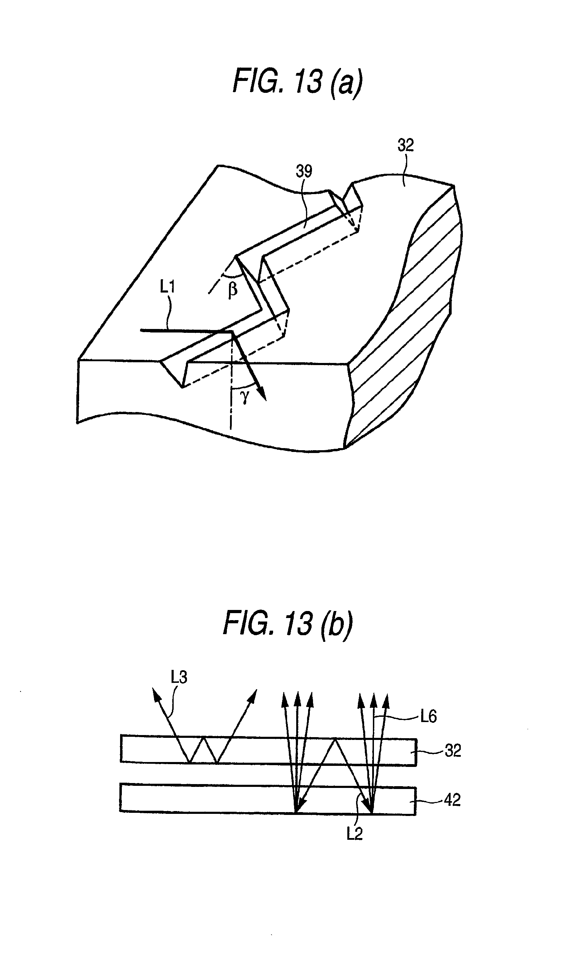

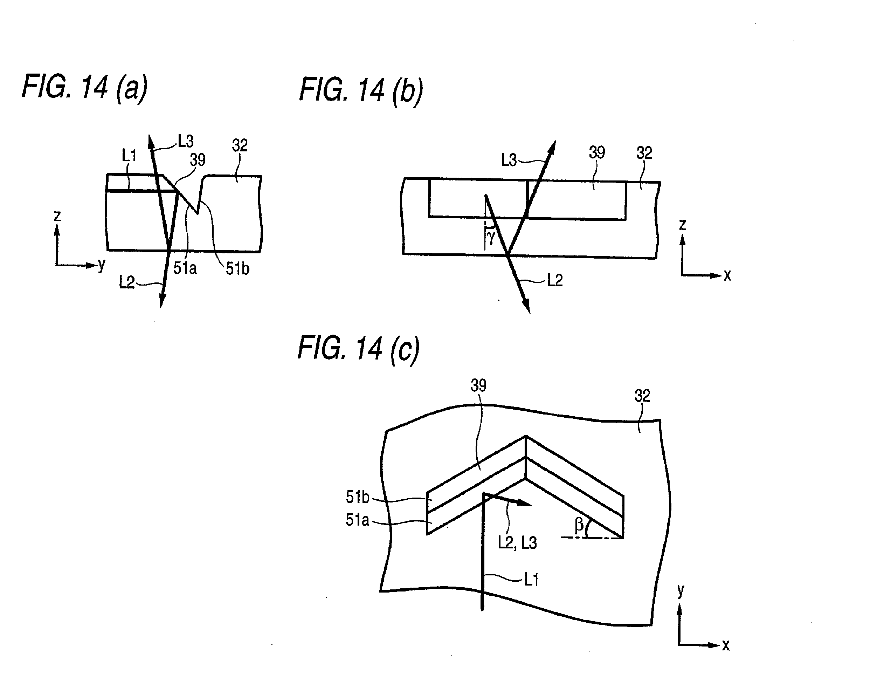

The light guide plate 32 is formed by transparent resin of a high refractive index such as polycarbonate resin, methacrylic resin, etc. Many pairs of optical patterns 39 formed by arranging optical patterns 39 formed in the shape of a pair of V-grooves in section in the shape of an unfolded fan are formed on the front face (front face on the observer side) of the light guide plate 32. Fig. 13A is a perspective view showing the shape of the optical pattern 39 arranged on the upper face of the light guide plate 32. As shown in Fig. 14A, the optical pattern 39 is formed in the V-groove shape in section, and the inclination angle of a slanting face (hereinafter called a reincident face) 51b on the side far from the light source 33 is large, and the inclination angle of a slanting face (hereinafter called an emitting pattern face) 51a on the side near the light source 33 is small. Further, in a plane view, each optical pattern 39 is inclined by β with respect to the light incident end face 38, and the adjacent optical patterns 39 are inclined in reverse directions and are formed in the shape of an unfolded fan or a zigzag shape as a whole. The optical patterns 39 may be continuously arranged as shown in Fig. 13A, and may be also arranged discontinuously or at intervals as shown in Fig. 9.

When the light L1 incident to the light guide plate 32 from the light source 33 reaches the emitting pattern face 51a of the optical pattern 39 formed in the V-groove shape in section, the light L1 incident to the emitting pattern face 51a is totally reflected on this emitting pattern face 51a and is directed to the back face side of the light guide plate 32 as shown in Figs. 14A, 14B and 14C. When the light L2 directed to the back face side of the light guide plate 32 is transmitted through the back face of the light guide plate 32, this light L2 is incident to the reflection type liquid crystal display panel 42 and illuminates this reflection type liquid crystal display panel 42. In contrast to this, when light reflected on the emitting pattern face 51a of the optical pattern 39 and directed to the back face side of the light guide plate 32 is reflected on the back face of the light guide plate 32, the reflected light L3 is emitted from the front face of the light guide plate 32 and becomes noise light L3.

However, when the noise light L3 reflected on the back face of the light guide plate 32 is seen from the y-axis direction, the direction of the noise light L3 emitted from the front face of the light guide plate 32 is greatly inclined in comparison with the conventional light guide plate 32. Figs. 14A, 14B and 14C show the behavior of light after this light is reflected on the optical pattern 39. Fig. 14A shows the situation of the yz plane in which the light guide plate 32 is seen from its side. Fig. 14B shows the situation of the zx plane in which the light guide plate 32 is seen from the direction perpendicular to the light incident end face 38. Fig. 14C shows the situation of the xy plane in which the light guide plate 32 is seen from the front face side. The optical pattern 39 is inclined in the shape of an unfolded fan when the light L1 is reflected on the emitting pattern face 51a of the optical pattern 39 and the noise light L3 reflected on the back face of the light guide plate 32 and emitted from the front face of the light guide plate 32 is then seen from the y-axis direction. Therefore, as shown in Figs. 14A, 14B and 14C, the light reflected on the emitting pattern face 51a of the optical pattern 39 is reflected slantingly downward at an angle γ with respect to a perpendicular line rising on the back face of the light guide plate 32. As this result, the light reflected on the back face of the light guide plate 32 is also inclined by the angle γ, and the noise light L3 emitted from the front face of the light guide plate 32 is also inclined by the angle γ from the direction perpendicular to the screen.

Fig. 15 is graphs showing characteristics of the above liquid crystal display device. Fig. 15A is a graph showing an angular distribution of the emitted light intensity of light reflected on the optical pattern 39 of the front light 31 and directed to the back face of the light guide plate 32. Each of Figs. 15B to 15E shows characteristics corresponding to the emitted light intensity distribution characteristics of Fig. 15A. Fig. 15B shows a light intensity distribution of the noise light L3 reflected on the back face of the light guide plate 32 and directed to the front face of the light guide plate 32. Fig. 15C shows light diffusion characteristics of the liquid crystal display panel 42. Fig. 15D shows an emitted light intensity distribution of the light L2 emitted from the liquid crystal display panel 42 illuminated by the front light 31. Fig. 15E shows an S/N ratio (contrast of image quality) at a lighting time of the front light 31. This S/N ratio is a ratio of the light L2 of an image reflected on the liquid crystal display panel 42 and then emitted to the front face side and the noise light L3 reflected on the back face of the light guide plate 32 and emitted to the front face side.

The contrast at the lighting time (no external light) of the front light 31 of the liquid crystal display device 41 is determined by the S/N ratio of the reflected light (image) from the reflection type liquid crystal display panel 42 and the reflected light (discoloration by pressing) reflected on the back face of the light guide plate 32. However, the characteristics (Fig. 15B) of the noise light L3 reflected and emitted from the back face of the light guide plate 32 are easily influenced by the emitted light intensity angular distribution of the light reflected on the optical pattern 39. In contrast to this, the image (Fig. 15D) reflected on the liquid crystal display panel 42 is not easily influenced by the emitted light intensity angular distribution of the light L2 emitted from the back face of the light guide plate 32, and is not changed so much in characteristics even when widening of this image is changed more or less by the diffusion characteristics of the liquid crystal display panel 42. As this result, the direction of the light reflected on the optical pattern 39 is slantingly bent by using the optical pattern 39 arranged in the shape of an unfolded fan when this direction is seen from the advancing direction (y-axis direction) of the light. Thus, as shown in Figs. 15A to 15E, the intensity of the light emitted in the perpendicular direction with respect to the front face of the light guide plate 32 can be reduced so that the S/N ratio in the perpendicular direction can be raised.

Concretely, when the liquid crystal display panel 42 is illuminated by the front light 31, illumination light for illuminating the liquid crystal display panel 42 is diffused and reflected on the reflection plate 46 of the liquid crystal display panel 42. Thus, after the illumination light is transmitted through the light guide plate 32, the illumination light is strongly emitted in the direction perpendicular to the screen of the liquid crystal display device 41. Namely, as shown in Fig. 13B, light L6 for generating an image is emitted approximately in a predetermined range (preferably the range of ±10° to ±30° with respect to the direction perpendicular to the screen) including the direction perpendicular to the screen. The image is easily recognized in this range. In contrast to this, the light L2 reflected on the optical pattern 39 of the front light 31 is reflected a leftward-rightward slanting direction when this light L2 is seen from the advancing (y-axis direction) of the light. Accordingly, the noise light L3 reflected on the back face of the light guide plate 32 is also reflected in the leftward-rightward slanting direction. Further, the light L1 within the light guide plate 32 is small in widening and has narrow directivity when this light L1 is seen from the advancing direction of the light as mentioned above. Therefore, this noise light L3 can be set such that no noise light L3 is overlapped with the angular range for emitting the image by suitably setting the arrangement of the optical pattern 39 even when this noise light L3 is emitted from the front face of the light guide plate 32. As this result, the image (light L6) including no noise light L3 can be seen in the area of a certain degree including the direction perpendicular to the screen of the front light 31, and the image of good quality having a large S/N ratio and good contrast can be seen. In contrast to this, since the arrival of the light L6 for generating the image is small and the noise light L3 is reversely concentrated in the direction dislocated from the range appropriate to see the image, the s/N ratio is very small and it is very difficult to see the image.

When the inclination of the light emitted from the front light 31 is increased and the interval (angle) 2θa of a peak of the light shown in Fig. 15A is larger than a diffusion angle 2θb of the liquid crystal display panel shown in Fig. 15C, no light is almost transmitted to the front face of the liquid crystal display device (the direction perpendicular to the screen). Accordingly, as shown in Figs. 15A and 15C, it is desirable that the angle (inclination angle in a front light emitted light peak direction) in a direction having a maximum value of the light emitted from the light emitting face of the light guide plate 32 is smaller than a reflection diffusion angle of the image display device as an irradiated object. However, when the inclination angle in the emitted light peak direction of the light emitted from the light emitting face of the light guide plate 32 is excessively small, the area of low contrast excessively approaches the direction perpendicular to the screen and the range 2θa of high contrast is narrowed. Accordingly, no image is easily seen when no inclination angle θa in the emitted light peak direction of the front light is 10° or more. It is sufficient to set this inclination angle θa to about 15° or more and 25° or less. It is desirable to set this inclination angle θa to about at least 10° or more and 30° or less.

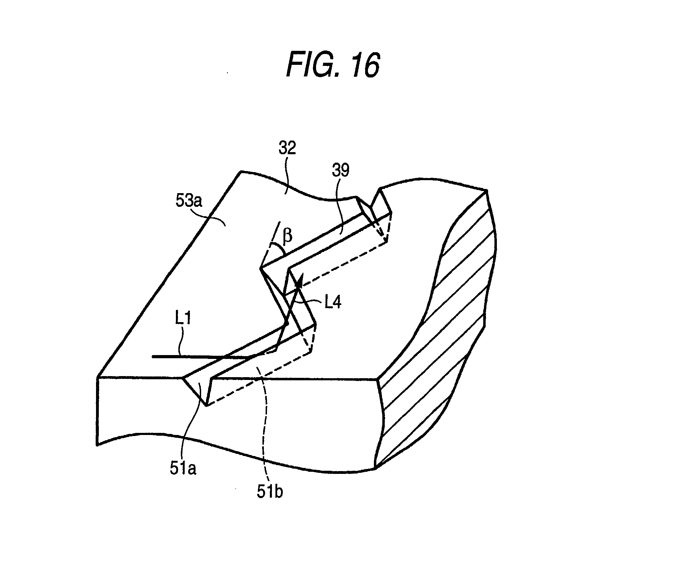

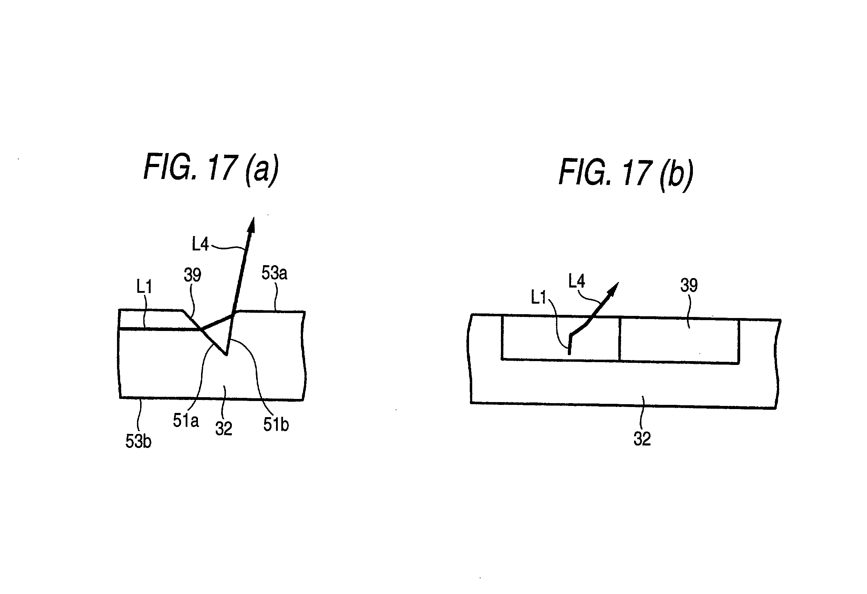

Noise light L4 directly leaked to the front face side from the optical pattern 39 will next be considered. Fig. 16 is a perspective view showing the behavior of light incident to the optical pattern 39 and emitted to the side of a front face 53a of the light guide plate 32 from the optical pattern 39. Figs. 17A and 17B show a view from the side face parallel to the zy plane of the light guide plate 32, and a view from the face parallel to the xz plane of the light guide plate 32. As shown in Figs. 16, 17A and 17B, light transmitted through the emitting pattern face 51a of the optical pattern 39 formed in a V-groove shape in section is again incident into the light guide plate 32 from the reincident face 51b on the side opposed to the light source. However, when this light is not incident to the light guide plate 32 from the reincident face 51b but is reflected on the reincident face 51b, this light is emitted to the front face 53a side of the light guide plate 32 and becomes noise light L4. In this case, since the optical pattern 39 is inclined by β with respect to the x-axis direction, the noise light L4 is emitted in a direction inclined from the z-axis direction in the reflection on the reincident face 51b when this noise light L4 is seen from the y-axis direction.

As already explained, the seeing range of the liquid crystal display device 41 is about ±10° to ±30° with the direction perpendicular to the screen as a center. Accordingly, when the noise light reflected on the back face 53b of the light guide plate 32 and the noise light reflected on the reincident face 51b of the optical pattern 39 are incident into this range, the image and the light of the light source are mixed and greatly reduce the contrast of the image.

In contrast to this, in the front light 31 of the present invention, the noise light L4 reflected on the reincident face 51b of the optical pattern of the light guide plate 32 is slantingly emitted on both sides with respect to the z-axis direction, and its inclination is determined by the arranging angle β of the optical pattern 39. Accordingly, if the arranging angle β of the optical pattern 39 is determined such that the inclination of the emitted noise light L4 is 30° or more, it is possible to avoid that the contrast of the image is reduced by the noise light. Therefore, the image quality of high contrast can be achieved in accordance with the liquid crystal display device 41 using the front light 31 of the present invention.

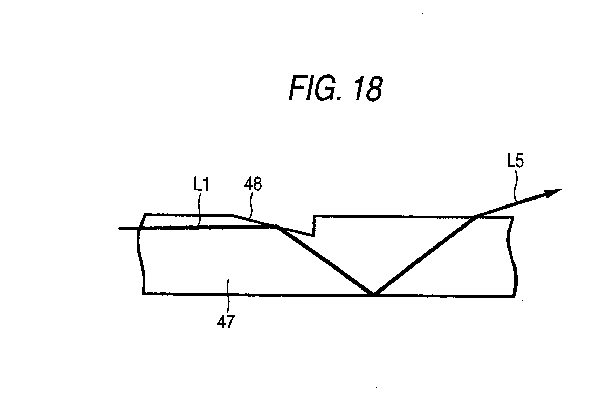

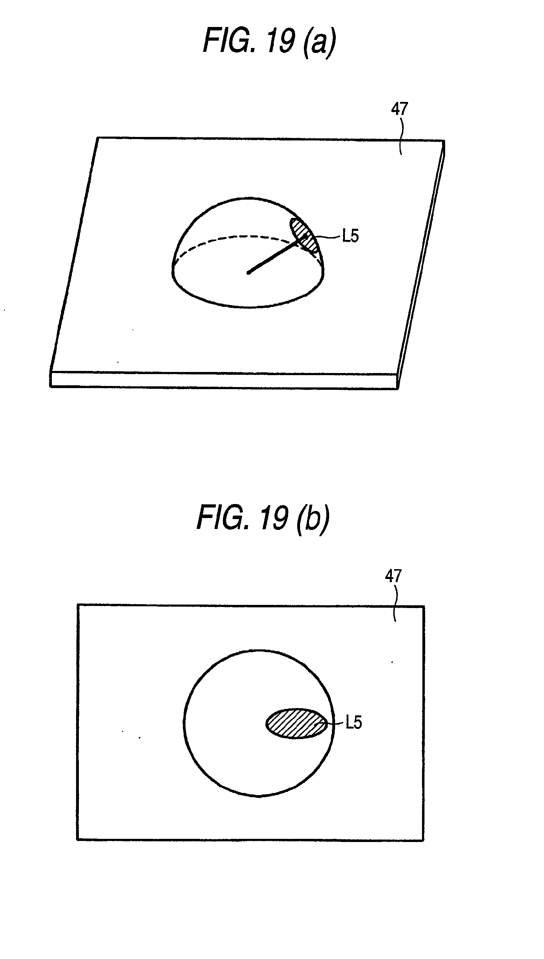

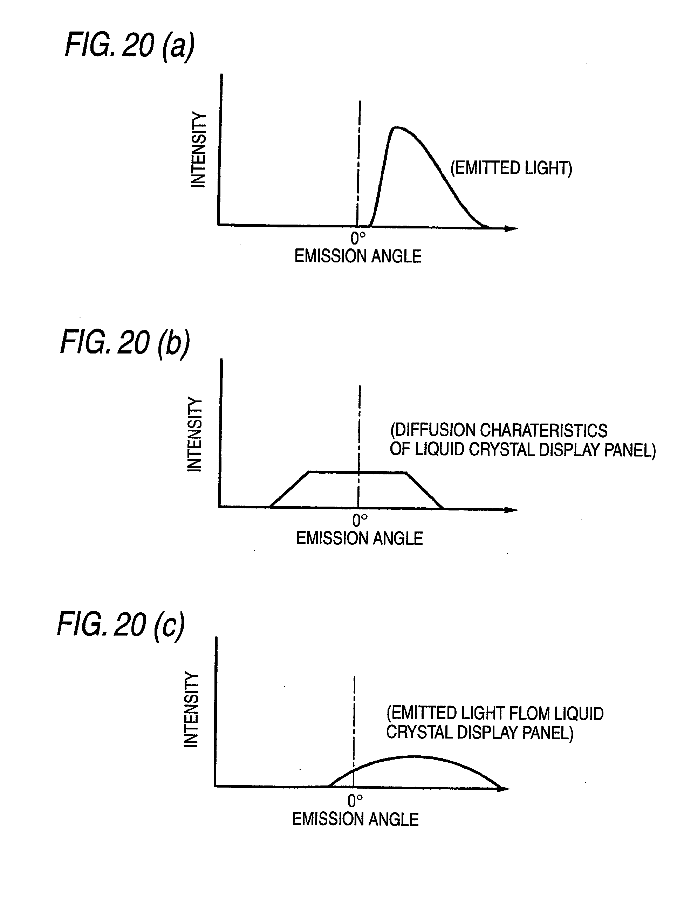

In the conventional front light having an optical pattern 48 arranged in parallel with the light incident end face 38 (β=0), noise light L5 reflected on the back face of a light guide plate 47 and emitted from the front face of the light guide plate 47 can be also set to have a large angle with respect to a perpendicular line rising from the light guide plate 47 by shallowing the optical pattern 48 and reducing the inclination of the emitting pattern face as shown in Fig. 18. Figs. 19A and 19B are a perspective view and a plan view showing the direction of the noise light L5 emitted from such a front light. Fig. 20A shows a light intensity distribution in the yz plane with respect to the noise light L5 reflected on the optical pattern 48 of such a front light and reflected on the back face of the light guide plate 47 and directed to the front face of the light guide plate 47. Fig. 20B shows light diffusion characteristics of the liquid crystal display panel. Fig. 20C shows an emitted light intensity distribution of the light emitted from the liquid crystal display panel illuminated by the front light.

In such a case, as shown in Figs. 19 and 20A, the greater part of light is considerably greatly inclined with respect to the z-axis direction and is reflected on the optical pattern 48. Accordingly, as shown in Fig. 20C, brightness of the light in the direction (z-axis direction) perpendicular to the screen is extremely reduced and no light is almost emitted onto the light source side (area on the light source side within the yz plane). Therefore, there is a disadvantage in that the seeing range (view field angle) of the image is narrowed.

Further, in such a construction, since there is only one peak of the light as shown in Fig. 20A, the range of the light reflected and emitted from the front light is narrow. Further, in the case of one peak of the light, the intensity of the light reflected on the liquid crystal display panel is suddenly changed in the direction perpendicular to the front light so that no image is easily seen.

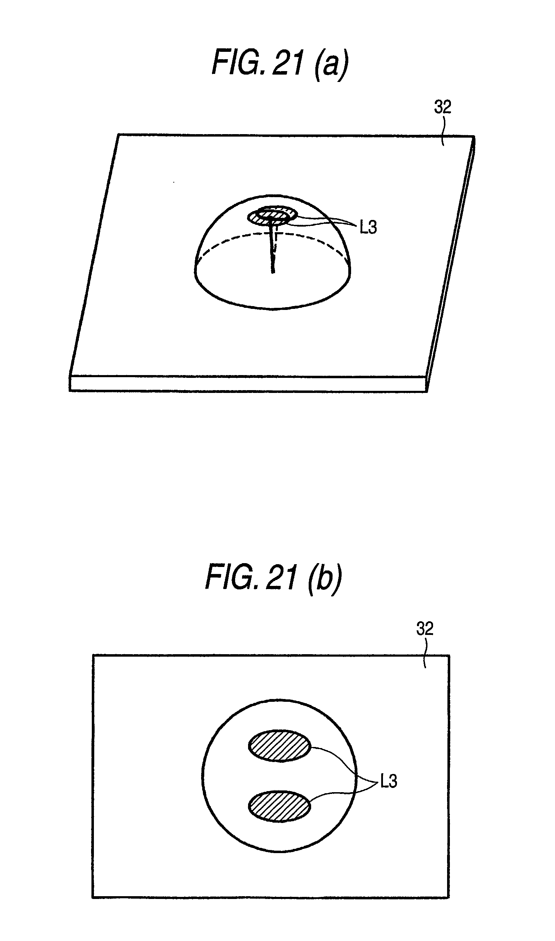

In contrast to this, in the case of the front light 31 of the present invention, as shown in Figs. 21A and 21B, the light reflected on the optical pattern 39 of the light guide plate 32 is shifted in the x-axis direction when this light is seen from the z-axis direction. Accordingly, when the noise light L3 is seen as a whole, this noise light L3 also becomes light close to the z-axis direction so that the image can be easily seen from the direction perpendicular to the screen and the view field angle can be comparatively widened.

If there are peaks of the light in plural places as in the front light of the present invention, the reflecting range of the light is desirably widened. Further, the screen is easily seen since the intensity of the light reflected on the liquid crystal display panel is gently changed.

Further, if the liquid crystal display device 41 of the present invention is constructed such that light is regularly reflected on the front face of the liquid crystal display panel 42, the light reflected on the front face of the liquid crystal display panel 42 and changed to the noise light is also emitted outside the view field angle after the light is emitted from the front light 31. Accordingly, there is no fear that the contrast of the image is reduced.

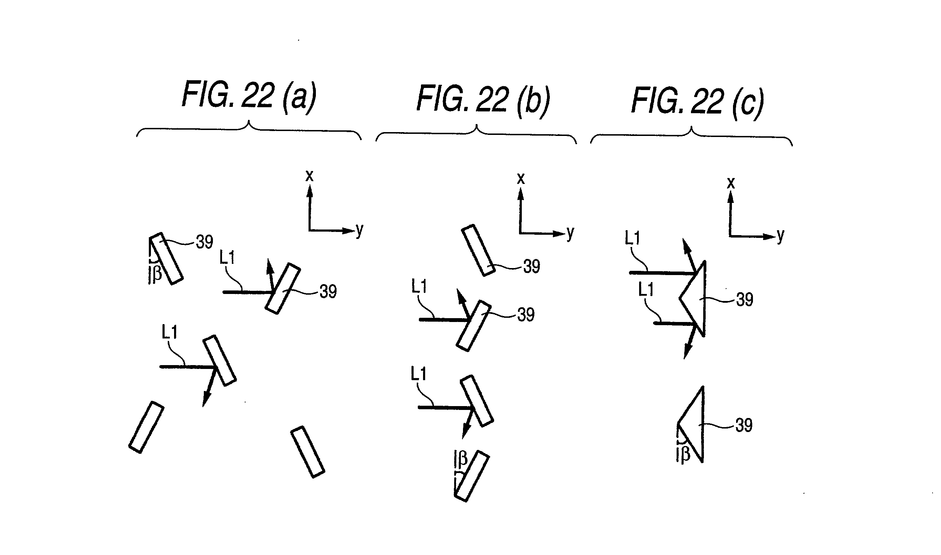

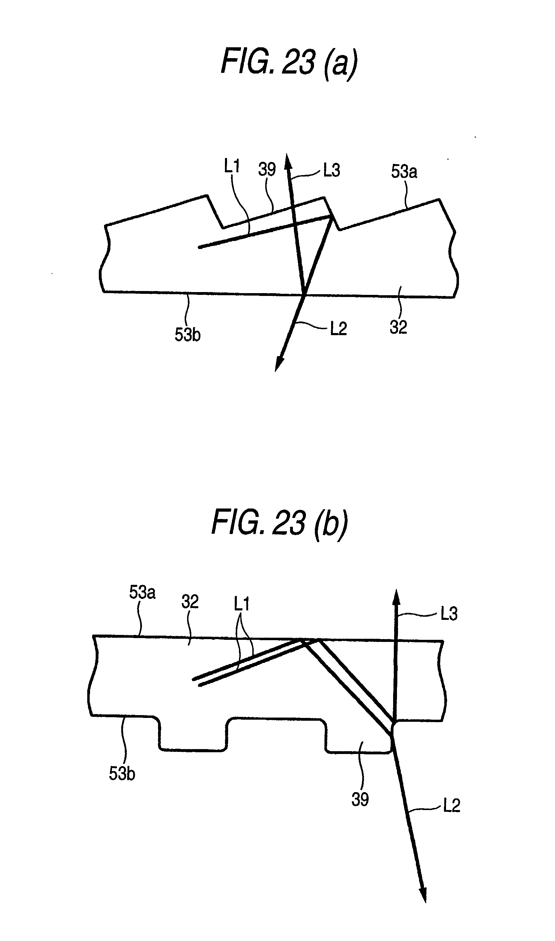

In the planar shape of the optical pattern 39, it is sufficient to incline the slanting face for reflecting the light L1 with respect to the light incident end face 38 or the x-axis direction. As shown in Fig. 22A, the linear optical pattern 39 may be also arranged discretely and at random. As shown in Fig. 22B, the linear optical pattern 39 may be also arranged discretely and regularly. As shown in Fig. 22C, the optical pattern 39 having a triangular shape may be also arranged. The sectional shape of the optical pattern 39 may be set to a triangular wave shape formed in the entire light emitting face 53a of the light guide plate 32 as shown in Fig. 23A, and may be also set to a rectangular shape formed on the back face of the light guide plate 32 as shown in Fig. 23B. In the pattern of the triangular wave shape in section in Fig. 23A, the contrast is reduced by the light reflection on the lower face of the light guide plate 32, but the contrast in the direction perpendicular to the screen can be improved by inclining this light in the x-axis direction from the z-axis direction. Further, in the optical pattern 39 of the rectangular shape in section in Fig. 23B, a rounded curve portion is caused in a base portion of the optical pattern 39 at a molding time of the light guide plate 32, and there is a fear of the reduction in contrast by reflecting the light on this curve portion. However, in this case, the reduction in contrast can be also restrained by inclining the optical pattern 39 with respect to the x-axis direction. Further, brightness of the screen can be uniformed if the optical pattern 39 is closely distributed as the distance from the light source is increased.

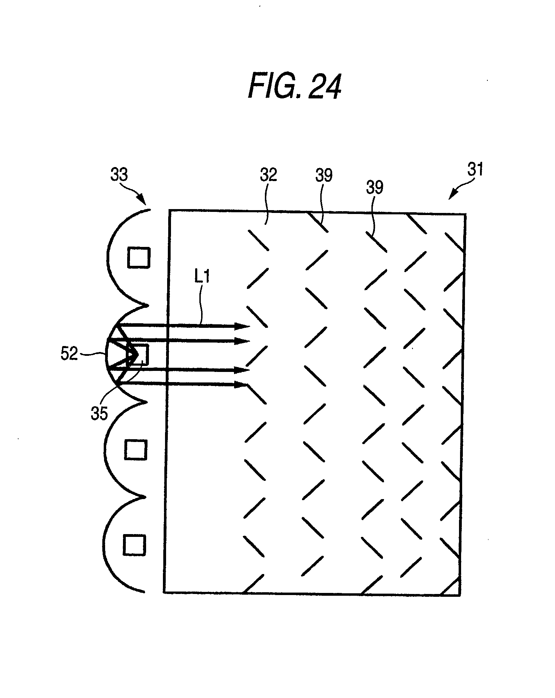

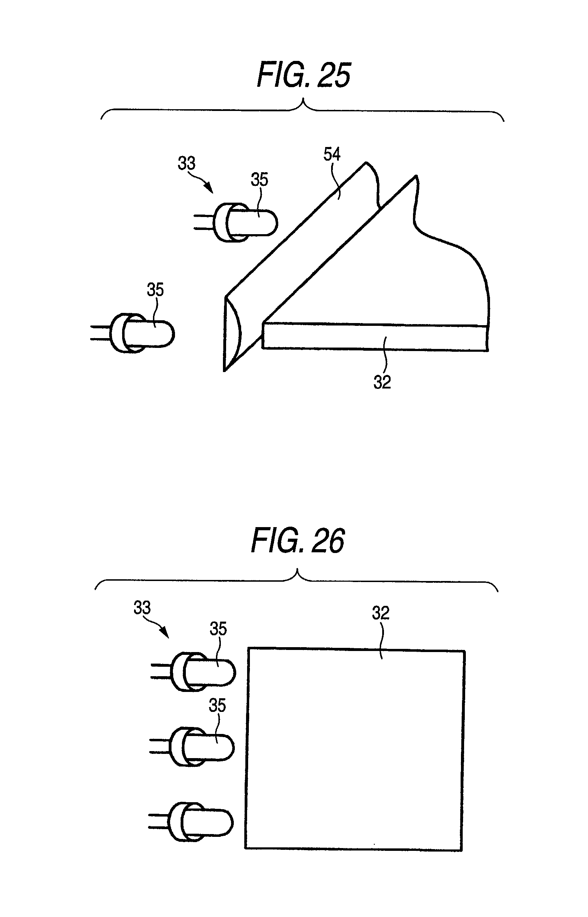

As can be seen from the above explanation, if light introduced to the light guide plate 32 from the light source 33 is approximately uniformed in the direction perpendicular to the light incident end face 38, the contrast can be raised by inclining the optical pattern 39 from the face perpendicular to this direction. Accordingly, the light source 33 may be constructed by a member able to emit light changed to parallel light. For example, in the light source 33 shown in Fig. 24, the light L1 emitted from the light emitting element 35 is changed to parallel light by reflecting this light L1 on a reflection plate 52 formed in a spherical shape or a paraboloidal shape. In the light source 33 shown in Fig. 25, light of the light emitting element 35 is changed to parallel light by using a cylindrical lens 54. In Fig. 26, plural light emitting elements 35 able to emit parallel light by the lens action of seal resin are arranged.

### (Second embodiment mode)

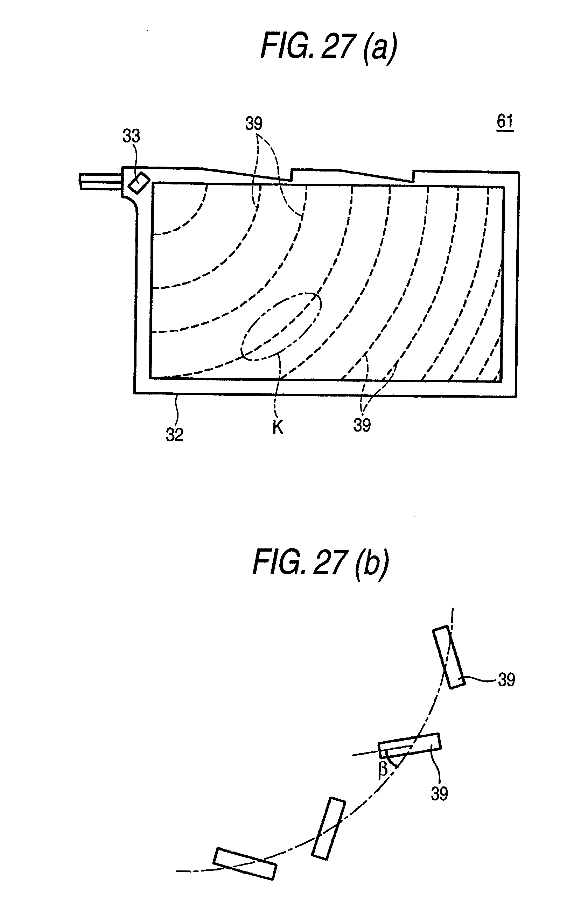

Fig. 27A is a plan view showing the structure of a front light in another embodiment mode of the present invention. In this front light 61, a comparatively small light source (so-called point light source) 33 is buried in one of corner portions outside the area of a light emitting face of the light guide plate 32. Plural or many optical patterns 39 formed in a V-groove shape are arranged in a front face area opposed to the light emitting face. The optical patterns 39 are arranged on a circular circumference with the light source 33 as a center. As shown in Fig. 27B, the individual optical patterns 39 have an inclination of β with respect to the circular circumference with the light source 33 as a center. Further, the optical patterns 39 are arranged such that the pattern density of the optical patterns 39 is gradually increased as the distance from the light source 33 is increased.

When such a front light 61 is used together with the reflection type liquid crystal display panel 42, an image reflected on the reflection type liquid crystal display panel 42 is also emitted in the direction perpendicular to the screen. In contrast to this, the light reflected on the optical pattern 39 is slantingly reflected in the direction perpendicular to a radial direction r. Accordingly, the noise light reflected on the back face of the light guide plate 32 is slantingly emitted from the light guide plate 32, and becomes light outside the view field. As this result, similar to the first embodiment mode, high contrast can be achieved.

Further, in accordance with such a front light 61, since light is only straightly widened in the radial direction with the light source 33 as a center, directivity of the light in each portion of the light guide plate 32 is extremely high. Accordingly, the contrast is greatly improved in comparison with the system for converting a point light source once to a linear light source as in the front light explained in the first embodiment mode.

### (Third embodiment mode)

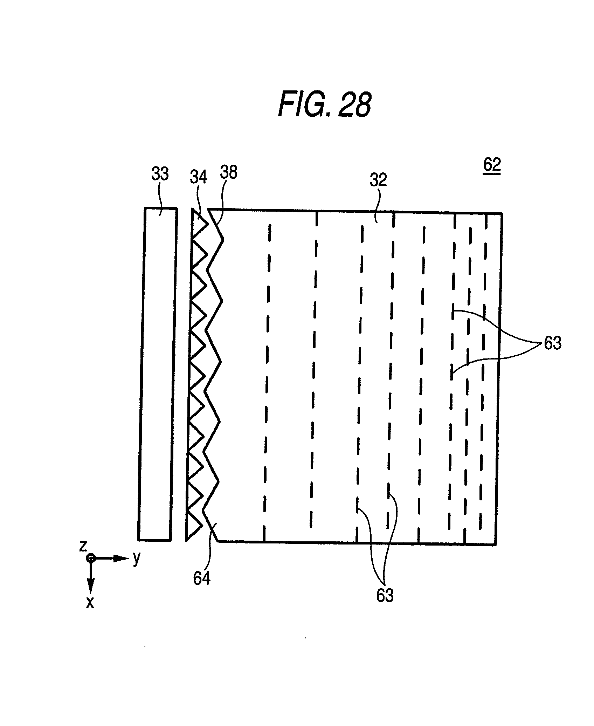

Fig. 28 is a plan view showing the structure of a front light 62 for the reflection type liquid crystal display device in still another embodiment mode of the present invention. In this front light 62, a prism sheet 34 is arranged in front of the light source 33 for converting light emitted from the light emitting element 35 to linear light by a light guide 36 so that parallel light approximately uniformed in the y-axis direction is incident to the light incident end face 38 of the light guide plate 32. On the other hand, a prism pattern 64 having a period twice the pattern period of the prism sheet 34 is arranged on the light incident end face 38 of the light guide plate 32. Further, plural or many optical patterns 63 parallel to the x-axis direction are arranged on the upper face of the light guide plate 32.

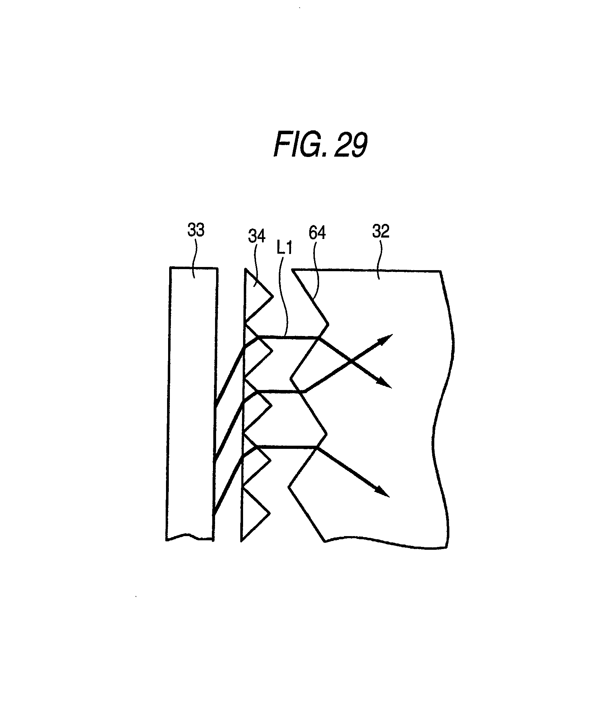

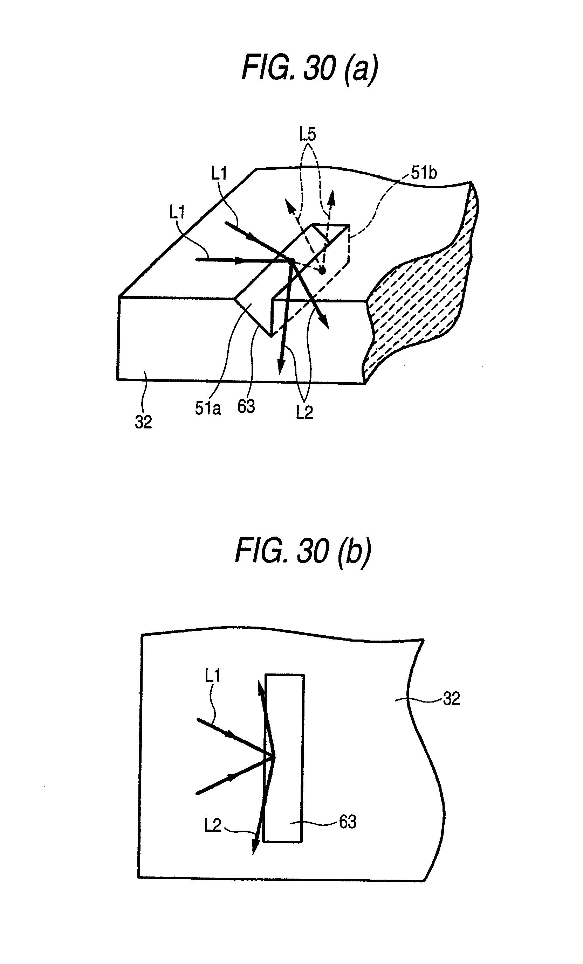

In this front light 62, when parallel light L1 emitted from the prism sheet 34 is incident to the prism pattern 64 of the light guide plate 32, this parallel light L1 is refracted in a different direction by the inclination of a slanting face of the prism pattern 64 and is then incident into the light guide plate 32 as shown in Fig. 29. Accordingly, when the light guide plate 32 is seen from its front face side, the lights L1 of narrow directivity uniformed in two directions are advanced within the light guide plate 32. As shown in Figs. 30A and 30B, when each of these lights L1 is reflected on the slanting face (emitting pattern face 51a) of the optical pattern 63, its reflected light is directed to the back face (light emitting face) of the light guide plate 32, but this light L1 is comparatively greatly dislocated from the z-axis direction and is reflected in a slanting direction. Therefore, this light L2 is emitted outside the view field angle greatly inclined from the z-axis direction and no contract of an image is easily reduced even when this light L2 is reflected on the back face of the light guide plate 32 and becomes noise light. Similarly, when the light is transmitted through the emitting pattern face 51a of the light guide plate 32 and is reflected on the reincident face 51b and becomes noise light L5, this light is also comparatively greatly dislocated from the z-axis direction and is emitted outside the view field angle and no contrast of the image is easily reduced. Accordingly, operating effects similar to those in the first embodiment mode can be also obtained in such an embodiment mode.

### (Fourth embodiment mode)

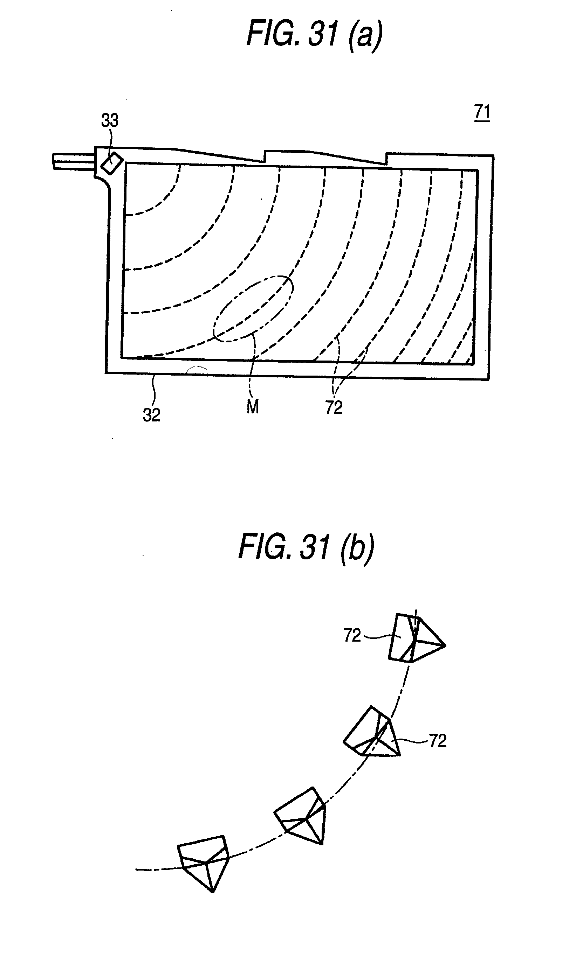

Fig. 31A is a plan view showing a front light in still another embodiment mode of the present invention. In this front light 71, similar to the front light (see Fig. 27) in the second embodiment mode, a comparatively small light source 33 is buried in one of corner portions of the light guide plate 32, and an optical pattern 72 is concavely arranged on a circular circumference with the light source 33 as a center on the front face of the light guide plate 32. Each optical pattern 72 is arranged so as to be directed to a direction (radial direction with the light source 33 as a center) connecting its position and the light source 33.

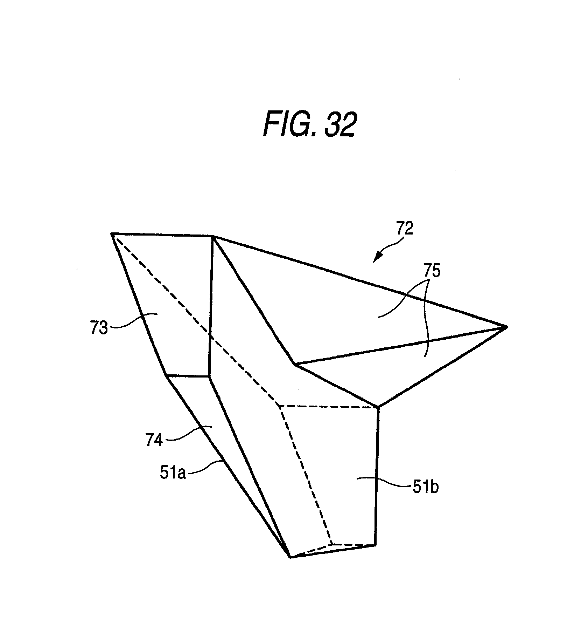

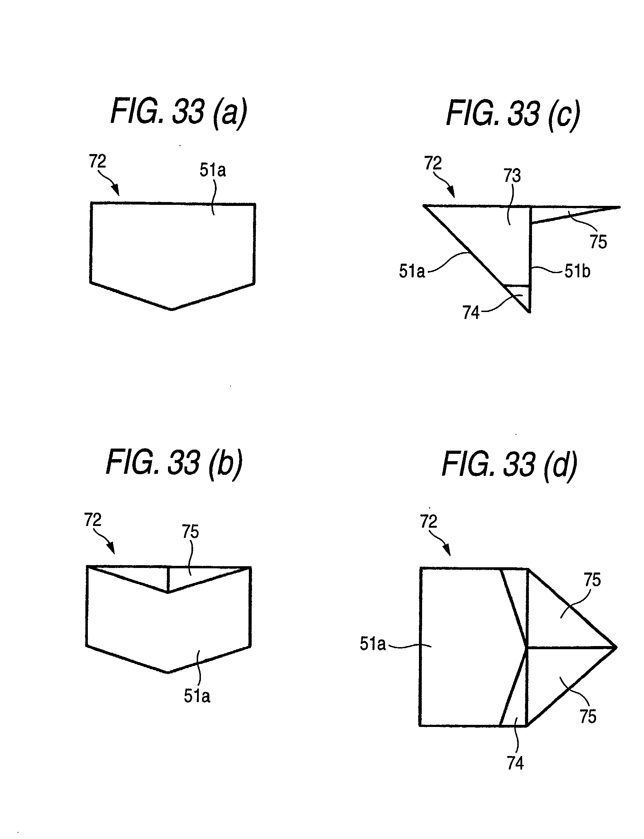

Fig. 32 is a perspective view showing the shape of the optical pattern 72 in this embodiment mode. Figs. 33A, 33B, 33C and 33D are a front view, a rear view, a side view and a bottom view of the optical pattern 72. In this optical pattern 72, the optical pattern of a V-groove shape nipped by the emitting pattern face 51a and the reincident face 51b is set to a base and a gentle inclination is provided from the lower end of the optical pattern 72 of the V-groove shape on its both end faces 73 toward the center of a bottom face 74 of the optical pattern 72. Accordingly, when this optical pattern 72 is seen from the front face, this optical pattern 72 is formed in a shape in which the pieces of shogi (Japanese chess) are inverted up and down. Further, a bill-shaped noise generating face 75 is extended backward from an upper portion of the reincident face 51b of the optical pattern 72. Accordingly, the bottom face 74 and the noise generating face 75 of the optical pattern 72 are inclined on both sides with respect to the front face of the light guide plate 32.

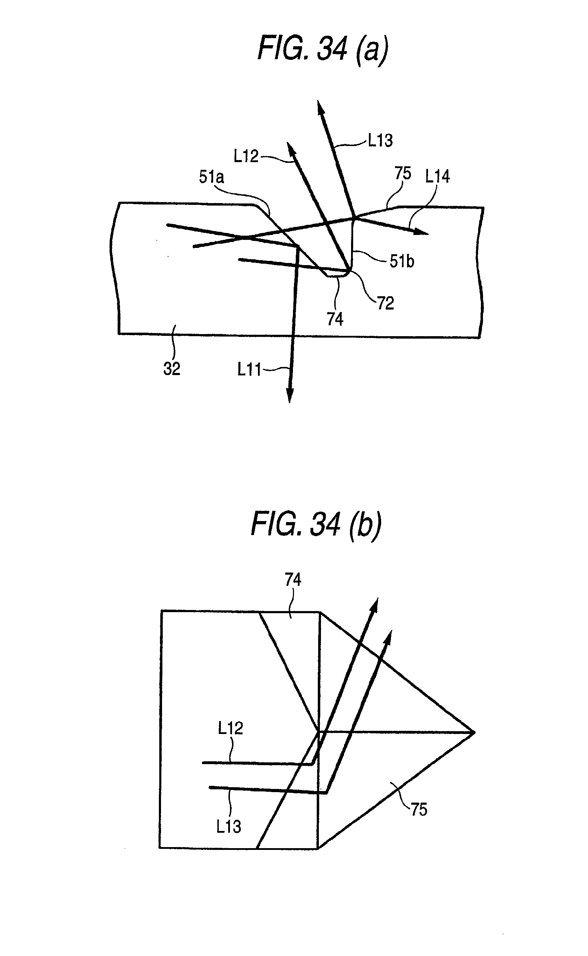

In accordance with the optical pattern 72 of such a shape, as shown in Fig. 34A, light L11 incident to the reflecting pattern face 51a is reflected on the reflecting pattern face 51a and is reflected approximately perpendicularly onto the back face side of the light guide plate 32, and is transmitted through the back face and is incident approximately perpendicularly to the liquid crystal display panel. Further, since light L14 transmitted through the reflecting pattern face 51a is reincident into the light guide plate 32 from the reincident face 51b, loss of the light is reduced so that utilization efficiency of the light is improved.

In contrast to this, the corner between the reincident face 51b and the bottom face 74 and the corner of an upper portion of the reincident face 51b are slacken and rounded at a die manufacturing time and a molding time. Accordingly, when lights L12 and L13 are incident to these corners, these lights are leaked onto the front face side of the light guide plate 32 and there is a fear of a reduction in the contrast of an image.

However, in accordance with this optical pattern 72, as shown in Figs. 34A and 34B, the light L12 incident to the bottom face 74 of the optical pattern 72 is emitted by the bottom face 74 in the slanting direction (with an inclination in the x-axis direction). Accordingly, no light L12 is incident at the view field angle and no contrast of the front face image is reduced even when this light becomes noise light. Further, since light incident to the upper portion of the reincident face 51b is also emitted by the noise generating face 75 in the slanting direction (with an inclination in the x-axis direction), this light is not incident at the view field angle and no contrast of the front face image is reduced even when this light becomes noise light.

In this case, the light reflected on the reflecting pattern face 51a and then reflected on the back face of the light guide plate 32 is not inclined, but becomes noise light reflected approximately perpendicularly. However, since the light incident to the liquid crystal display panel also becomes perpendicular light, brightness is raised.

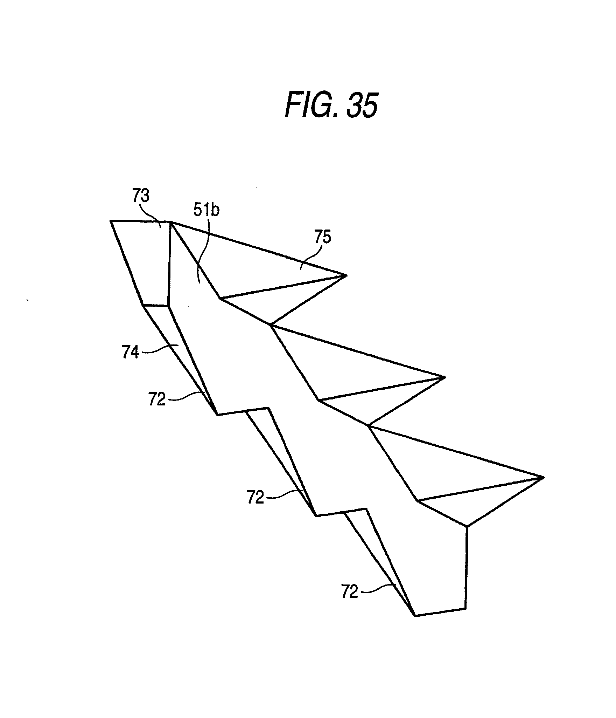

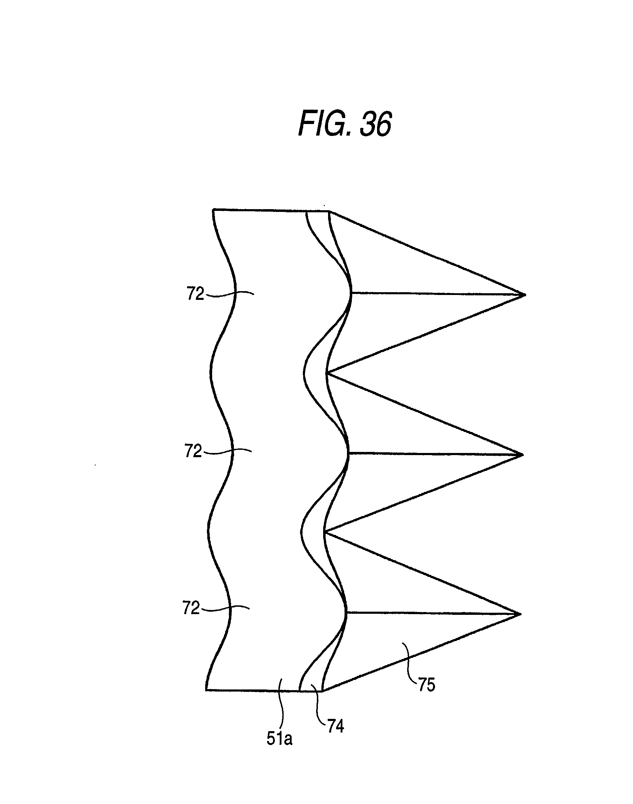

As shown in Fig. 35, the above optical patterns 72 may be also continuously connected to each other. At this time, the reflecting pattern face 51a and the reincident face 51b may be also set to a curved surface as shown in Fig. 36.

### (Fourth embodiment mode)

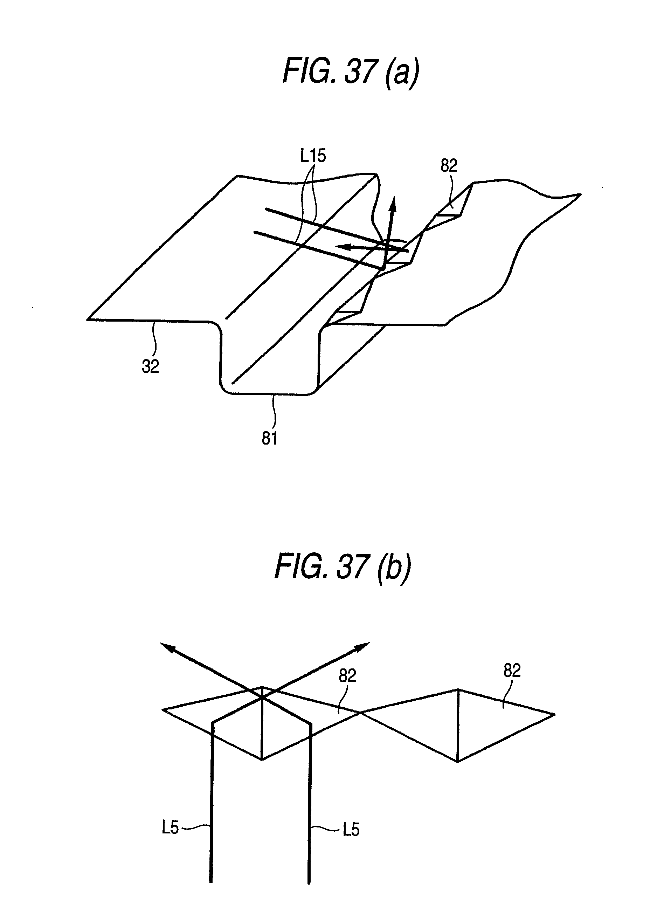

Fig. 37A is a perspective view showing the shape of a lower face of the light guide plate 32 of a front light in still another embodiment mode of the present invention. Fig. 37B is a view showing the shape of an upper portion corner face of an optical pattern 81 arranged on the lower face of the light guide plate 32. In this embodiment mode, the optical pattern 81 of a rectangular shape in section is arranged on the lower face of the light guide plate 32, and an upper portion corner face 82 of the optical pattern 81 is inclined in the length direction of the optical pattern 81, and the optical pattern 81 having a pair of triangular shapes is formed in a V-groove shape. Accordingly, light L15 reflected on this upper portion corner face 82 is also reflected in a slanting transversal direction so that a reduction in the contrast of an image can be prevented.

### (Fifth embodiment mode)

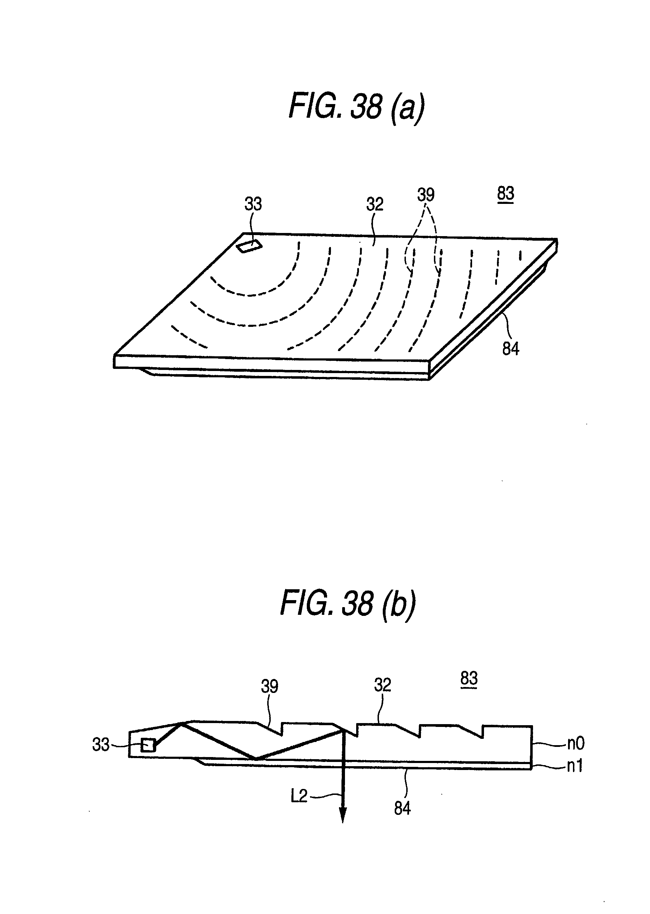

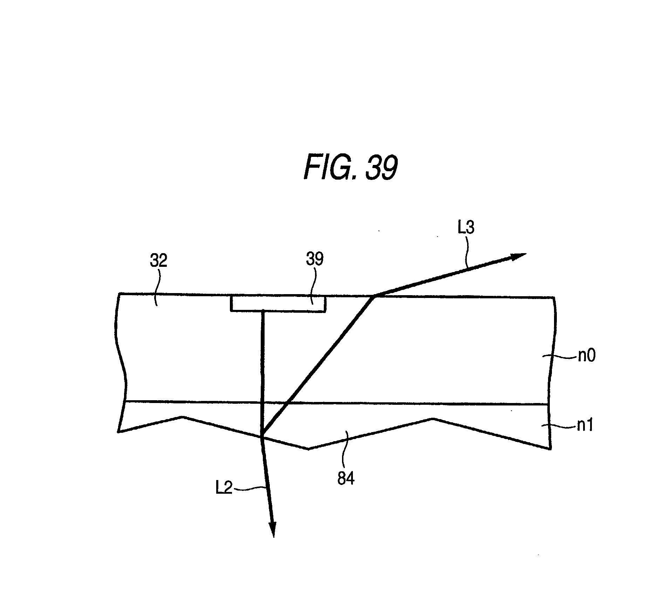

Figs. 38A and 38B are a perspective view and a sectional view of a front light in still another embodiment mode of the present invention. In this front light 83, a small light source 33 (point light source) is arranged in one portion of the light guide plate 32, and light is emitted in a radiating direction from the point light source. Accordingly, light reaching each arranging point of the optical pattern 39 is uniformed in one direction when this light is seen from the direction perpendicular to the light guide plate 32. Further, each optical pattern 39 formed in a V-groove shape is arranged perpendicularly to a direction (radial direction with the light source 33 as a center) connecting this point and the light source 33. A low refractive index transparent resin layer 84 having a refractive index n1 (e.g., 1.40) smaller than the refractive index n0 (e.g., 1.59) of the light guide plate 32 is formed on the back face of the light guide plate 32. As shown in Fig. 39, the interface of the back face of the light guide plate 32 and the transparent resin layer 84 is set to be flat in a section perpendicular to the direction connecting the arranging position of the optical pattern 39 and the light source 33. The lower face of the transparent resin layer 84 (i.e., the interface of the transparent resin layer 84 and the air) is formed in a roof shape or a comparatively shallow V-groove shape. For example, a pattern inclination angle ε of the transparent resin layer 84 is set to about 7°.

Light emitted from the light source 33 is not incident into the transparent resin layer 84, but is advanced while total reflection is repeated between the front face and the back face of the light guide plate 32. This light then reaches the optical pattern 39. When this light reaches the optical pattern 39, this light is reflected on the slanting face (reflecting pattern face 51a) of the optical pattern 39 so that this light is emitted toward the back face side approximately perpendicularly to the light guide plate 32 as shown in Fig. 38B. At this time, light transmitted through the transparent resin layer 84 is refracted (e.g., changed about 5° in direction) and is incident to the liquid crystal display panel. On the other hand, as shown in Fig. 39, light reflected on the lower face of the transparent resin layer 84 is emitted in a slanting direction (e.g., in a direction inclined 20° from a perpendicular line) with respect to the direction perpendicular to the light guide plate 32 since the lower face of the transparent resin layer 84 is inclined. Accordingly, no light L3 reflected on the lower face of the transparent resin layer 84 reaches the perpendicular direction of the light guide plate 32 so that there is no fear of a reduction in the contrast of a front face image caused by the noise light L3.

Here, the refractive index n0 of the light guide plate 32 and the refractive index n1 of the transparent resin layer 84 will be considered. As the difference between the refractive index n0 of the light guide plate 32 and the refractive index n1 of the transparent resin layer 84 is increased (n0>n1), the amount of light guided within the light guide plate 32 is increased, which is preferable. However, resin having a refractive index smaller than 1.4 tends to be weakened in adhesive force. In contrast to this, the ratio of the light guided within the light guide plate 32 can be raised by setting light directivity in the thickness direction (z-axis direction) within the light guide plate to be preferable by inclining the front face of the light guide plate 32 in a light source near portion of the light guide plate 32 and increasing the thickness of the light guide plate 32 in an optical pattern forming area, etc.

In this case, since the refractive index difference between the light guide plate 32 and the transparent resin layer 84 is small, no light is reflected on the interface between the back face of the light guide plate 32 and the transparent resin layer 84 and is reflected in the direction perpendicular to the light guide plate 32. Accordingly, there is almost no fear of the reduction in contrast of the image due to the noise light reflected on the back face of the light guide plate 32.

### (Sixth embodiment mode)

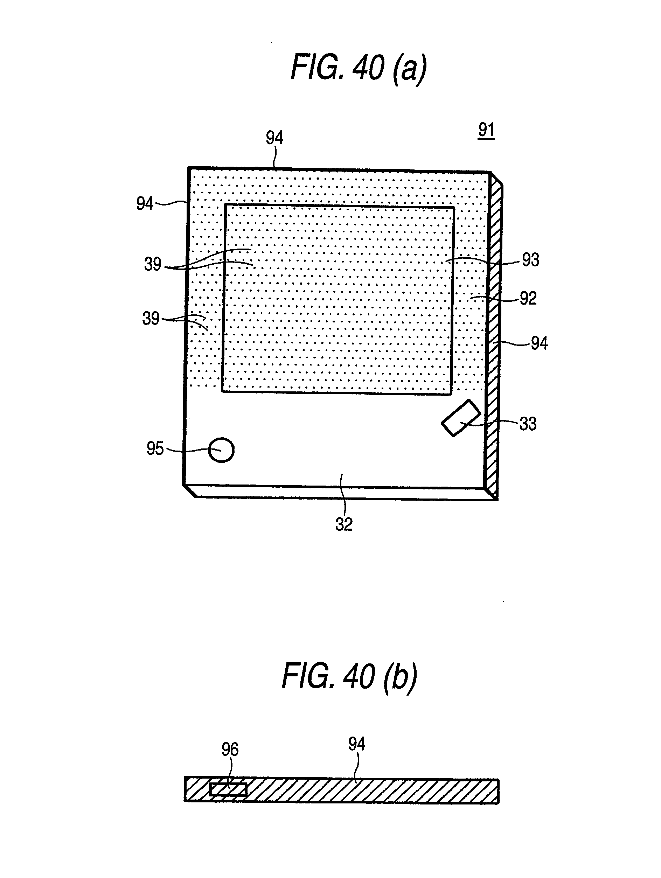

Figs. 40A and 40B are a perspective view showing the structure of a front light in still another embodiment mode of the present invention, and a view showing an end face on the side far from the light source. In this front light 91, a pattern area 92 is formed outside an effective area 93 in which the optical pattern 39 is formed on the front face of the light guide plate 32. The light source 33 is arranged in an area outside the effective area 93 and the pattern area 92. The effective area 93 corresponds to an image area of the liquid crystal display panel, and is a range required to emit uniform light.

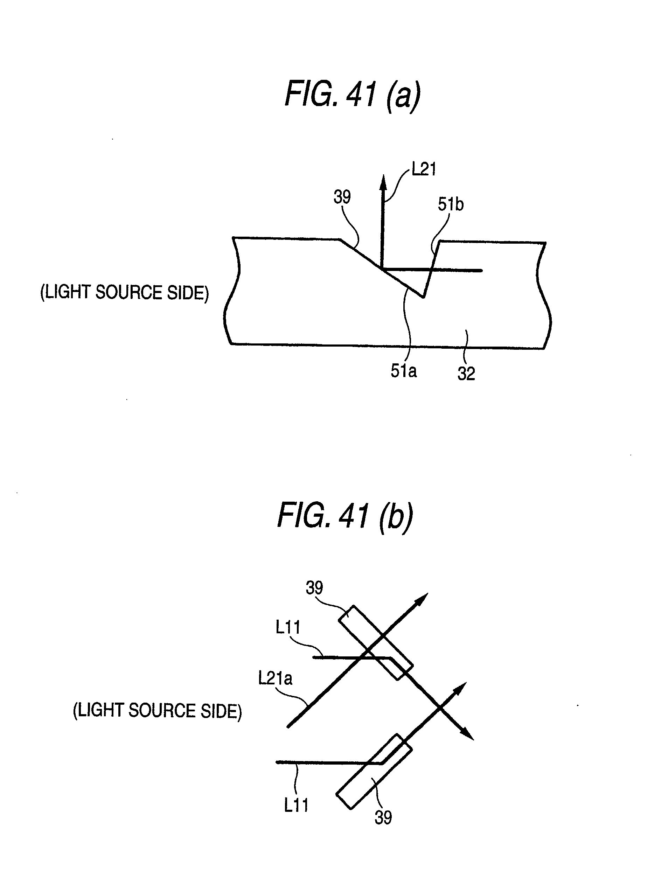

In the general front light, as shown in Fig. 41A, the optical pattern 39 of a V-groove shape in section becomes a gentle slanting face (reflecting pattern face) 51a on the side near the light source, and constitutes a steep slanting face (reincident face) 51b on the side far from the light source. Therefore, light L11 incident from the light source side is reflected on the slanting face 51a and is directed to the back face side of the light guide plate 32. In contrast to this, when light L21 is incident to the optical pattern 39 from the side opposed to the light source 33, the light L21 passing through the slanting face 51b is reflected on the slanting face 51a and is emitted to the side of an observer as shown in Fig. 41A so that the contrast of an image is reduced. Further, when the optical pattern is arranged in the shape of an unfolded fan, the light is reflected on the optical pattern 39 and is emitted toward the upper direction perpendicular to the light guide plate 32 as shown by light L21a of Fig. 41B by only slightly shifting the light from its original advancing direction by reflecting this light on e.g., the side face of the light guide plate 32.

Thus, the light incident to the optical pattern 39 from the side opposed to the light source 33 is emitted from the light source 33, and is propagated within the light guide plate 32 and reaches the outer circumferential face of the light guide plate 32. This light is then reflected on an area (the outer circumferential face of the light guide plate 32 and an area outside the effective area in which no optical pattern 39 is formed) having no optical pattern 39 in the outer circumference of the light guide plate 32, and is returned to the side of the light source 33. Therefore, in the front light 91 of this embodiment mode, black paint 94 is printed on both side faces and an end face on the side far from the light source 33 except for an end face located on the side of the light source 33 among the outer circumferential face of the light guide plate 32 so that the light reaching the outer circumferential face of the light guide plate 32 is not reflected onto the light source side but is absorbed. Further, the optical patterns 39 are closely arranged in the area outside the effective area 93 on the front face of the light guide plate 32 so that the pattern area 92 is formed. Light reaching the pattern area 92 is emitted to the back face of the light guide plate 32 by the optical patterns 39 of the pattern area 92 so that no light is reflected onto the light source side. Since this emitted light is emitted outside the effective area 93, no contrast of the image is reduced.

Since light is also reflected on the trace 95 of an eject pin able to be formed at a molding time of the light guide plate 32, it is desirable that the trace 95 of the eject pin is not arranged on the side opposed to the light source 33 through a forming area of the optical pattern 39, but is arranged in a portion almost unable to be attained by light, e.g., in a corner portion on the light source side and an edge near the light source as shown in Fig. 40A.

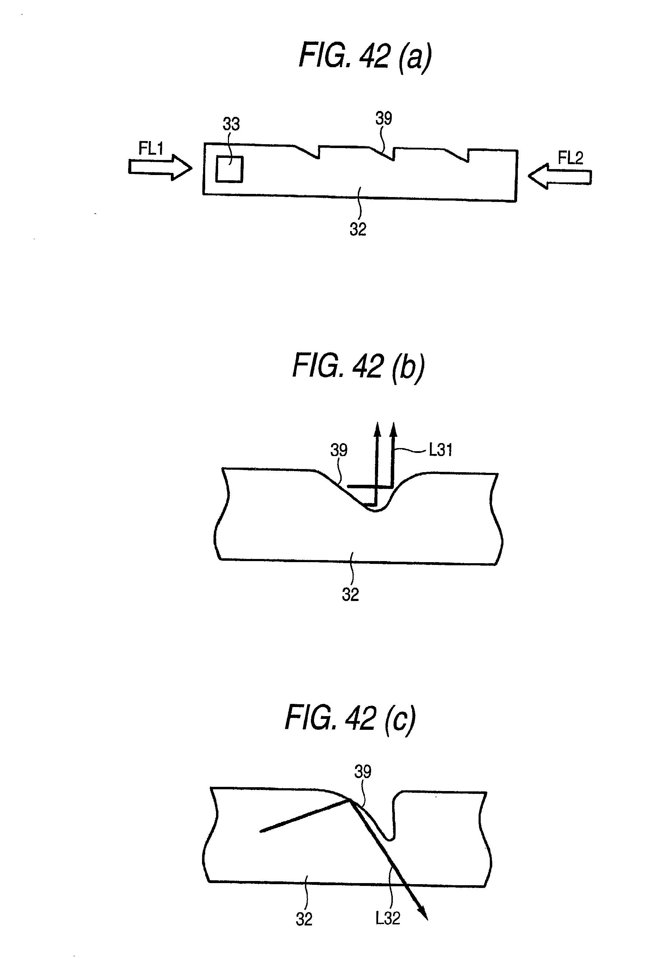

When a gate port in injection molding of the light guide plate 32 is arranged on the side of the light source 33 and resin is injected from the light source side as in FL1 shown in Fig. 42A, the slanting face 51b on the side far from the light source 33 is slackened and rounded as shown in Fig. 42B. When the slanting face 51b is thus rounded, light L31 reaching this optical pattern 39 is reflected on the slanting face 51b and is easily emitted to the front face side of the light guide plate 32. In contrast to this, when the gate port in the injection molding of the light guide plate 32 is arranged on the side opposed to the light source 33 and the resin is injected from the side opposed to the light source 33 as in FL2 shown in Fig. 42A, the slanting face 51a on the side of the light source 33 is slackened and rounded as shown in Fig. 42C. However, the slanting face 51b on the side far from the light source 33 is molded at a steep angle. When the slanting face 51a is thus rounded, one portion of light L32 reaching the optical pattern 39 is easily emitted in the slanting direction. Accordingly, although brightness is slightly reduced, the reduction in contrast can be restrained.

Therefore, in this front light 91, the gate port is located on an end face on the side opposed to the light source 33 through the forming area of the optical pattern 39. As shown in Fig. 40A, a trace 96 of the gate port is formed on an end face on the side far from the light source 33.

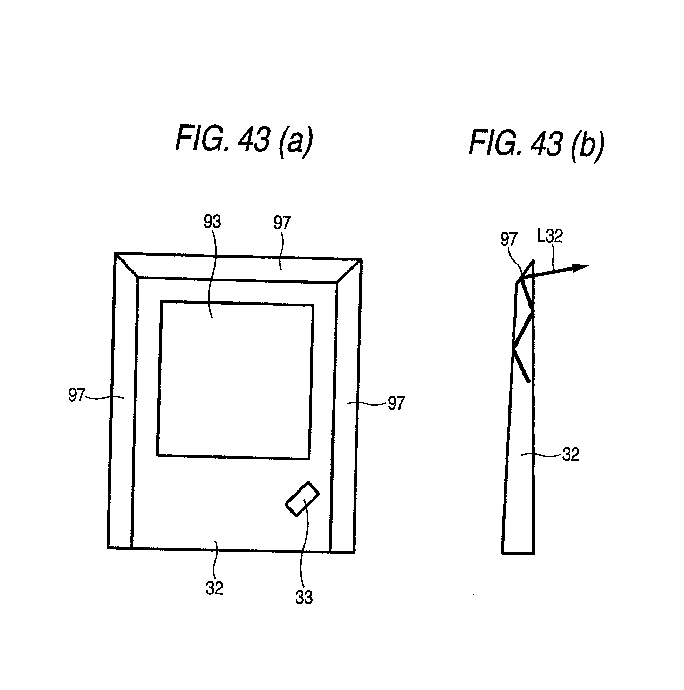

In the embodiment mode of Fig. 40, the black paint 94 is printed on the outer circumferential face of the light guide plate 32 to restrain the reflection of light, but a separate method can be also used. Namely, as shown in Figs. 43A and 43B, when a taper is formed in an outer circumferential portion of the light guide plate 32 and light L32 of the light source 33 reaches the edge of the light guide plate 32, the light L32 is reflected on this taper portion 97 and is emitted to the exterior of the light guide plate 32 and is not returned onto the light source side. The black printing may be also performed on the front face of this taper portion 97. When drawing processing is performed on the outer circumferential face of the light guide plate 32 and the taper portion, light is greatly absorbed and emitted, which become a more preferable mode.

In accordance with the image display device of the present invention, since noise light reflected and generated on the back face of the front light, etc. can be emitted in the slanting direction, no noise light is easily emitted in the emitting direction of an image so that the contrast of the image can be improved and image quality can be preferably set.

It is desirable that no noise light is emitted at all to the front face side (the direction opposed to the liquid crystal display panel 2) of the front light so as not to reduce the contrast of the image or the image quality. However, the screen is normally seen in the range of ±10° to ±20° with the direction perpendicular to the screen of the liquid crystal display device as a center. Accordingly, when light is really leaked to the front face side of the front light, it is considered that it is sufficient to restrain the noise light emitted within this range as much as possible and set the direction of light emitted from the front face of the front light to be located outside this range.

## Claims

1. An image display device constructed by a reflection type image display panel and a front light arranged in front of the reflection type image display panel;
wherein the contrast of an image of said image display panel formed by light emitted from said front light within at least one plane including a direction perpendicular to the screen of said image display panel has at least one minimum value on each of both sides with respect to the direction perpendicular to the screen of the image display panel.

2. An image display device according to claim 1, wherein the larger part of the light emitted from said front light and reflected on the front face of said image display panel is regular reflected light.

3. An image display device according to claim 1, wherein reflected light directivity of the light passing through said front light and incident perpendicularly to said image display panel has a maximum value in a direction different from that providing a maximum value in the perpendicular direction, and
the angle formed by said direction providing the maximum value of the reflected light directivity and the direction perpendicular to said image display panel has a value close to the angle formed by the direction providing a maximum value in the emitted light intensity of the light emitted from a light emitting face of said front light and the direction perpendicular to said image display panel.

4. An image display device constructed by a reflection type image display panel and a front light arranged in front of the reflection type image display panel;
wherein the advancing direction of light within the front light is approximately uniformed in one direction in each position within said front light when the advancing direction is seen from a direction perpendicular to said front light; and
the contrast of an image of said reflection type image display panel formed by the front light within a section perpendicular to this light advancing direction is highest in the direction perpendicular to the front light, and at least one minimum value of the contrast is provided within the range of 10° or more and 30°or less with respect to the perpendicular direction.

5. An image display device constructed by a reflection type image display panel and a front light arranged in front of the reflection type image display panel;
wherein the contrast of an image of said reflection type image display panel formed by light of the front light in an approximately arbitrary position of said front light is highest in a direction perpendicular to the front light in a plane perpendicular to a direction connecting this position and a light source in the approximately arbitrary position, and at least one minimum value of the contrast is provided within the range of 10° or more and 30° or less with respect to the perpendicular direction.

6. A front light comprising a light source and a light guide plate and arranged in front of a reflection type liquid crystal display panel;
wherein the emitted light intensity of light irradiated from said light source and emitted from a light emitting face of said light guide plate within at least one plane including a direction perpendicular to the light emitting face of said light guide plate has at least one maximum value on each of both sides with respect to the direction perpendicular to the light emitting face of the light guide plate.

7. A front light according to claim 6, wherein the angle of the direction having the maximum value of the light emitted from the light emitting face of said light guide plate is smaller than the reflection diffusion angle of an image display device as an irradiated object.

8. A front light according to claim 6, wherein the angle formed by the direction perpendicular to the light emitting face of said light guide plate and the direction providing the maximum value of the emitted light intensity of the light emitted from the light emitting face is 10° or more and 30° or less.

9. A front light comprising a light source and a light guide plate for confining light from said light source and widening this light in a planar shape and emitting this light to an irradiated object side and transmitting light reflected on the irradiated object to an observer side;
wherein the advancing direction of the light within the light guide plate in each position within said light guide plate is approximately uniformed in one direction when this advancing direction is seen from a direction perpendicular to said light guide plate; and
the direction providing a maximum value in directivity of the light emitted to the irradiated object side within a plane perpendicular to the light advancing direction has an angle of 10° or more and 30° or less with respect to the direction perpendicular to the light guide plate.

10. A front light according to claim 9, wherein a concavo-convex pattern for emitting the light within the light guide plate from the light emitting face by reflecting or refracting this light is formed on the light emitting face of the light guide plate or its opposite side face, and is slantingly arranged with respect to a direction perpendicular to the advancing direction of the light within the light guide plate when the concavo-convex pattern is seen from a direction perpendicular to the light emitting face.

11. A front light comprising a light source and a light guide plate for confining light from said light source and widening this light in a planar shape and emitting this light to an irradiated object side and transmitting light reflected on the irradiated object to an observer side;
wherein the advancing direction of the light within the light guide plate in each position within said light guide plate is approximately uniformed in one direction when this advancing direction is seen from a direction perpendicular to said light guide plate; and
a direction for maximizing the directivity of the light emitted to the observer side and a direction for maximizing the directivity of the light emitted to the irradiated object side are not conformed to each other within a plane perpendicular to the light advancing direction.

12. A front light according to claim 11, wherein an emitting pattern face for emitting the light within the light guide plate from the light emitting face by reflecting or refracting this light, and a noise generating face for emitting the light to the observer side are formed on the light emitting face of said light guide plate or its opposite side face; and
said emitting pattern face and said noise generating face are mutually inclined when these faces are seen from the direction perpendicular to the light emitting face.

13. A front light comprising a light source and a light guide plate for confining light from said light source and widening this light in a planar shape and emitting this light to an irradiated object side and transmitting light reflected on the irradiated object to an observer side;
wherein a concavo-convex pattern for reflecting the light within said light guide plate is formed on a light emitting face of said light guide plate or its opposite side face;
the advancing direction of the light within the light guide plate in each position within said light guide plate is approximately uniformed in one direction when this advancing direction is seen from a direction perpendicular to said light guide plate;
a direction for maximizing the directivity of the light reflected by said concavo-convex pattern and transmitted through the front face of the light guide plate on the irradiated object side, and a direction for maximizing the directivity of the light again reflected on the front face of the light guide plate on the irradiated object side and emitted to the observer side are not conformed to each other within a plane perpendicular to the light advancing direction; and
a direction for maximizing the directivity of the light emitted to the observer side by the concavo-convex pattern and a direction for maximizing the directivity of the light emitted to the irradiated object side are not conformed to each other within the plane perpendicular to the light advancing direction.

14. A front light according to claim 13, wherein a layer having a refractive index lower than that of the light guide plate is formed on the irradiated object side of said light guide plate, and
the boundary face of the light guide plate and said low refractive index layer is flat, and the boundary face of said low refractive index layer and the air is a gently inclined concavo-convex face when these boundary faces are seen from the plane perpendicular to said light advancing direction.

15. A front light comprising a light source and a light guide plate for confining light from said light source and widening this light in a planar shape and emitting this light to an irradiated object side and transmitting light reflected on the irradiated object to an observer side;
wherein the advancing direction of the light within the light guide plate is approximately uniformed in plural directions when the advancing direction is seen from a direction perpendicular to said light guide plate.

16. A front light comprising a light source and a light guide plate for confining light from said light source and widening this light in a planar shape and emitting this light to an irradiated object side and transmitting light reflected on the irradiated object to an observer side;
wherein light absorption means is arranged in at least one portion of the outer circumferential face of said light guide plate.

17. A front light comprising a light source and a light guide plate for confining light from said light source and widening this light in a planar shape and emitting this light to an irradiated object side and transmitting light reflected on the irradiated object to an observer side;
wherein means for emitting the light reaching the outer circumferential face of the light guide plate to the exterior of the light guide plate is arranged in at least one portion of the outer circumferential face of said light guide plate.

18. A front light comprising a light source and a light guide plate for confining light from said light source and widening this light in a planar shape and emitting this light to an irradiated object side and transmitting light reflected on the irradiated object to an observer side;
wherein a concavo-convex pattern for reflecting or refracting the light within the light guide plate is formed by molding on a light emitting face of said light guide plate or its opposite side face; and
a gate position in the molding of said light guide plate is arranged on the side opposed to the light source with respect to a forming area of said concavo-convex pattern.
